(19) **Europäisches Patentamt / European Patent Office / Office européen des brevets**

(11) **EP 3 520 416 B1**

(12) **FASCICULE DE BREVET EUROPEEN**

(45) Date de publication et mention de la délivrance du brevet:
**24.06.2020 Bulletin 2020/26**

(21) Numéro de dépôt: **17783910.7**

(22) Date de dépôt: **12.09.2017**

(51) Int Cl.:
*H04N 19/61* (2014.01)          *H04N 19/463* (2014.01)
*H04N 19/48* (2014.01)

(86) Numéro de dépôt international:
**PCT/FR2017/052422**

(87) Numéro de publication internationale:
**WO 2018/065687 (12.04.2018 Gazette 2018/15)**

(54) **PROCÉDÉ DE CODAGE D'UNE IMAGE, PROCÉDÉ DE DECODAGE, DISPOSITIFS, EQUIPEMENT TERMINAL ET PROGRAMMES D'ORDINATEURS ASSOCIÉS**

VERFAHREN ZUR DECODIERUNG EINES BILDES UND ZUGEHÖRIGES CODIERUNGSVERFAHREN, VORRICHTUNGEN, ENDGERÄTEAUSRÜSTUNG UND COMPUTERPROGRAMME

METHOD FOR ENCODING AN IMAGE AND ASSOCIATED DECODING METHOD, DEVICES, TERMINAL EQUIPMENT AND COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2016 FR 1659493**

(43) Date de publication de la demande:
**07.08.2019 Bulletin 2019/32**

(73) Titulaire: **B<>COM**
**35510 Cesson-Sévigné (FR)**

(72) Inventeurs:
• **HENRY, Félix**
  **35760 Saint Gregoire (FR)**
• **CLARE, Gordon**
  **35740 Pace (FR)**

(74) Mandataire: **Ermeneux, Bertrand**
**AVOXA**
**5 allée Ermengarde d'Anjou**
**ZAC Atalante Champeaux**
**CS 40824**
**35108 Rennes (FR)**

(56) Documents cités:
**FR-A1- 3 023 112     US-A1- 2013 044 808**

• **KOYAMA J ET AL: "Coefficient sign bit compression in video coding", IEEE PICTURE CODING SYMPOSIUM, 7 mai 2012 (2012-05-07), pages 385-388, XP032449909, DOI: 10.1109/PCS.2012.6213370 ISBN: 978-1-4577-2047-5**

EP 3 520 416 B1

## Description

### 1. Domaine de l'invention

Le domaine de l'invention est celui du codage et du décodage d'images ou de séquences d'images, et notamment de flux vidéo.

Plus précisément, l'invention concerne la compression d'images ou de séquences d'images utilisant une représentation par blocs des images.

L'invention peut notamment s'appliquer au codage image ou vidéo mis en œuvre dans les codeurs actuels ou à venir (JPEG, MPEG, H.264, HEVC, etc et leurs amendements), et au décodage correspondant.

### 2. Art antérieur

On considère un schéma de compression classique d'une image numérique, selon lequel l'image est divisée en blocs de pixels. Un bloc courant à coder est prédit à partir d'un bloc précédemment codé décodé. Un bloc résidu est obtenu par soustraction des valeurs originales aux valeurs prédites. Il est ensuite transformé à l'aide d'une transformation de type DCT (pour « Discrète Cosinus Transform », en anglais) ou ondelettes. Les coefficients transformés sont quantifiés puis leurs amplitudes sont soumises à un codage entropique de type Huffmann ou arithmétique. Un tel codage obtient des performances efficaces, car, du fait de la transformation, les valeurs des amplitudes à coder sont en grande majorité nulles.

En revanche, il ne s'applique pas aux valeurs des signes des coefficients, dont les valeurs + et - sont généralement associées à des probabilités d'apparition équivalentes. Ainsi, les signes des coefficients sont codés par un bit 0 ou 1.

On connait de l'article de Koyama J. et al. intitulé « Coefficient sign bit compression in video coding » et publié dans les proceedings de la conférence « IEEE Picture Coding Symposium » , 7 mai 2012, p. 385-388, une méthode de sélection de signes de coefficients d'un bloc résidu à prédire. La sélection proposée est basée sur un nombre de coefficients prédéterminé en fonction de leur amplitude et de la taille du bloc dont ils sont issus. Les signes sélectionnés sont prédits en testant toutes les combinatoires possibles des valeurs de ces signes pour le bloc et en choisissant celle qui maximise un critère de vraisemblance prédéterminé. Les prédictions obtenues sont comparées aux valeurs originales des signes pour déterminer la valeur d'un indicateur de prédiction, appelé aussi résidu d'un signe prédit. Cet indicateur peut prendre deux valeurs, qui sont une première valeur représentative d'une prédiction correcte et une deuxième valeur représentative d'une prédiction incorrecte. Le reste des signes est codé de façon explicite, sans prédiction.

On connait de la demande de brevet français publiée sous le numéro FR3023112 le fait de sélectionner les signes des coefficients à prédire dans le bloc courant en fonction d'un score associé à un contexte de codage du coefficient, le score étant représentatif d'un niveau de fiabilité d'une prédiction du signe.

Un avantage est qu'on s'assure que pour une grande majorité des signes prédits, l'indicateur de prédiction indiquera une prédiction correcte et procurera ainsi un contexte favorable au codage entropique. De cette manière, les performances de compression sont accrues.

### 3. Inconvénients de l'art antérieur

Un inconvénient de cette technique est qu'elle nécessite, pour M signes à prédire, d'évaluer la prédiction obtenue pour chacune des $2^M$ combinaisons de valeurs de ces signes et, pour ce faire, de reconstruire le bloc courant à partir de cette prédiction. Une telle reconstruction nécessite notamment de transformer le résidu de prédiction du bloc courant ce qui introduit une complexité importante côté codeur comme côté décodeur.

### 4. Objectifs de l'invention

L'invention a notamment pour objectif de pallier ces inconvénients de l'art antérieur.

Un objectif de l'invention est de proposer une solution permette de simplifier considérablement le processus de prédiction de signes sans impact sur les performances de compression.

### 5. Exposé de l'invention

Ces objectifs, ainsi que d'autres qui apparaîtront par la suite, sont atteints à l'aide d'un procédé de codage d'une image numérique, ladite image étant divisée en une pluralité de blocs de pixels traités dans un ordre défini, ledit procédé comprenant les étapes suivantes, mises en œuvre pour un bloc courant :

- Traitement du bloc courant destiné à fournir un vecteur de coefficients transformés;
- Sélection d'une séquence de M signes de coefficients à prédire dans le vecteur de coefficients, avec M entier supérieur ou égal à 2;
- Prédiction des valeurs des signes de la séquence à partir d'une pluralité d'hypothèses de combinaisons et d'une fonction de coût ;
- Pour un signe de la séquence, codage d'un indicateur représentatif d'une différence entre sa valeur réelle et sa valeur prédite ;

Selon l'invention, l'étape de prédiction comprend les sous-étapes suivantes :

pour au moins une deuxième hypothèse, dite hypothèse courante :

- Obtention d'un vecteur de pixels associé à l'hypothèse courante, par combinaison linéaire d'un vecteur de pixels associé à au moins une première hypothèse et obtenu par transformation d'un vecteur de coefficients comprenant la combinaison de signes de la première hypothèse précédemment traitée et différente de l'hypothèse courante par la valeur d'au moins un signe (sj), avec j entier compris entre 0 et M, et d'au moins un vecteur motif de pixels obtenu par transformation d'un vecteur de coefficients (VMj) associé audit au moins un signe (sj) de la séquence, de même dimension que le vecteur de coefficients transformés, et comprenant un coefficient d'amplitude égale à celle dudit vecteur à la position du coefficient correspondant au signe sj dans ledit vecteur, tous les autres coefficients étant mis à zéro ;

- Calcul de la fonction de coût pour l'hypothèse courante à partir du vecteur de pixels obtenu.

Avec l'invention, le vecteur de pixels associé à l'hypothèse courante s'obtient par simple combinaison linéaire d'un vecteur de pixels associé à une hypothèse déjà traitée et d'au moins un vecteur motif de pixels préalablement calculé, sans nécessité de recourir à l'application d'une transformée.

Le vecteur motif de pixels est obtenu par transformation d'un vecteur de coefficients, comprenant un seul coefficient non nul, ce qui rend l'opération beaucoup moins complexe.

Du fait que les vecteurs motifs de coefficients comportent un seul coefficient non nul, l'application de la transformée inverse engendre un coût de calcul très modéré. En effet, pour un bloc courant de taille NxN pixels dont tous les coefficients sont susceptibles n'être non nuls, il faut, pour une transformée inverse normale NxN projections sur des vecteurs de base de dimension NxN. Il faut donc $N^4$ multiplications et $N^4$ additions. En revanche, dans le cas d'un vecteur motif de coefficients, du fait qu'a priori un seul coefficient est non nul, Il ne reste plus qu'une projection à réaliser, soit $N^2$ multiplications et $N^2$ additions.

Le vecteur de pixels de l'hypothèse courante est construit par combinaison linéaire du vecteur de pixels associé à une hypothèse déjà traitée et d'autant de vecteurs qu'il existe de différences de signes entre l'hypothèse courante et cette hypothèse.

L'invention s'appuie sur une approche tout-à-fait nouvelle et inventive de la prédiction, qui consiste à exploiter le résultat du traitement d'au moins une hypothèse précédente pour traiter plus efficacement l'hypothèse courante.

L'évaluation des coûts des différentes hypothèses de combinaisons de prédictions de signes se trouve donc simplifiée, sans préjudice sur la qualité de cette évaluation et la décision de prédiction qui en résulte.

De façon correspondante, l'invention concerne aussi un procédé de décodage d'une image numérique à partir d'un train binaire, ladite image étant divisée en une pluralité de blocs traités dans un ordre défini, le train binaire comprenant, pour un bloc, des données codées représentatives d'un vecteur de coefficients transformés, ledit procédé comprenant les étapes suivantes, mises en œuvre pour le bloc, dit bloc courant :

- Décodage des amplitudes des coefficients du vecteur de coefficients transformés, extraites du train binaire ;
- Sélection d'une séquence de M signes de coefficients à prédire dans le vecteur de coefficients, avec M entier supérieur ou égal à 2 ;
- Prédiction de valeurs des signes de la séquence à partir d'une pluralité d'hypothèses de combinaisons et d'une fonction de coût ;
- Décodage de valeurs d'un indicateur de prédiction des signes sélectionnés à partir de données codées extraites du train binaire, l'indicateur de prédiction d'un signe étant représentatif d'une différence entre sa valeur réelle et sa valeur prédite ;
- Calcul des valeurs décodées des signes sélectionnés à partir des valeurs d'indicateurs de prédiction décodées et des valeurs prédites;
- Reconstruction des coefficients du bloc à partir des amplitudes décodées et des signes décodés;

Selon l'invention, l'étape de prédiction comprend les sous-étapes suivantes :
pour au moins une deuxième hypothèse, dite hypothèse courante :

- Obtention d'un vecteur de pixels associé à l'hypothèse courante, par combinaison linéaire d'un vecteur de pixels associé à au moins une première hypothèse précédemment traitée et différente de l'hypothèse courante par la valeur d'au moins un signe (sj), avec j entier compris entre 0 et M, et obtenu par transformation d'un vecteur de coefficients comprenant la combinaison de signes de la première hypothèse et d'au moins un vecteur motif obtenu de pixels obtenu par transformation d'un vecteur de coefficients (VMj) associé audit au moins un signe (sj) de la séquence, de même dimension que le vecteur de coefficients transformés, et comprenant un coefficient d'amplitude égale à celle dudit vecteur à la position du coefficient correspondant au signe sj dans ledit vecteur, tous les autres coefficients étant mis à zéro;
- Calcul de la fonction de coût pour l'hypothèse courante à partir du vecteur de pixels obtenu.

Ainsi, le même mécanisme s'applique au décodeur qu'au codeur. Pour retrouver la prédiction utilisée par le codeur et déterminer la valeur des indicateurs de prédiction des signes à prédire du bloc courant, le décodeur évalue les différentes hypothèses de prédiction de signes selon le principe de l'invention et de façon similaire au codeur.

Avantageusement, l'étape d'obtention d'au moins un vecteur motif est mise en œuvre M fois et l'étape d'obtention d'un vecteur de pixels par transformation d'au moins un vecteur de coefficients est réalisée pour M+1 premières hypothèses.

De cette manière, on minimise le nombre de transformations à appliquer, qui se réduit au nombre M+1 de vecteur de pixels à calculer.

Les vecteurs de pixels des autres hypothèses peuvent ensuite toutes être obtenus par combinaison linéaire de ces M vecteurs motifs et M+1 vecteurs de pixels.

L'état de l'art met en œuvre $2^M$ transformations, chacune de complexité $N^4$ soit : $2^M \times N^4$ multiplications et $2^M \times N^4$ additions, alors que l'invention met en œuvre M+1 transformations et $2^M - M - 1$ combinaisons linéaires, ce qui représente $(M+1) \times N^4$ multiplications et $(M+1) \times N^4 + (2^M - M - 1) * N^2$ additions.

Si on approxime dans un cas réel (N est grand et M petit), la complexité de l'état de l'art est en $O(2^M \times N^4)$ et celle de l'invention en $O(M \times N^4)$ ce qui est beaucoup plus faible : pour la variable M, on passe d'une complexité exponentielle à une complexité linéaire.

Avantageusement, pour l'obtention du vecteur de pixels, le signe du coefficient non nul est choisi égal à +.

Un avantage de cette solution est sa simplicité. Bien sûr, on pourrait choisir d'autres valeurs de signes.

Avantageusement, le au moins un vecteur motif est calculé dans une étape préalable au traitement des hypothèses et stocké en mémoire et l'obtention du au moins un vecteur motif comprend la lecture de ladite mémoire.

Selon ce mode de réalisation, l'obtention des vecteurs motifs n'étant pas dépendante des vecteurs de pixels d'hypothèses précédentes, elle peut être réalisée à l'initialisation de l'étape de prédiction pour le bloc courant.

Avantageusement, M vecteurs motifs sont calculés au préalable et l'étape d'obtention d'un vecteur de pixels est réalisée pour une seule première hypothèse.

De cette manière, on minimise le nombre de transformations à appliquer. Parmi les M+1 transformations mises en œuvre, M sont appliquées à des vecteurs ne comprenant qu'un seul coefficient non nul. L'opération est donc globalement très peu complexe.

Selon un autre aspect de l'invention, la fonction de coût est calculée pour un sous-ensemble des pixels d'un vecteur de pixels, ledit sous-ensemble comprenant au moins les pixels localisés à une frontière du bloc courant avec un bloc voisin déjà traité et l'étape de transformation transforme le vecteur de coefficients en un sous-vecteur de pixels correspondant audit sous-ensemble.

On utilise une transformée particulière qui ne reconstruit que les pixels dont on a besoin pour évaluer la fonction de coût. Un avantage est une réduction de complexité de l'évaluation de la fonction de coût.

Les différents modes ou caractéristiques de réalisation mentionnés ci-après peuvent être ajoutés indépendamment ou en combinaison les uns avec les autres, aux caractéristiques du procédé de décodage et/ou du procédé de codage défini ci-dessus.

L'invention concerne également un dispositif de codage adapté pour mettre en œuvre le procédé de codage selon l'un quelconque des modes particuliers de réalisation définis ci-dessus. Ce dispositif de codage pourra bien sûr comporter les différentes caractéristiques relatives au procédé de codage selon l'invention. Ainsi, les caractéristiques et avantages de ce dispositif de codage sont les mêmes que ceux du procédé de décodage, et ne sont pas détaillés plus amplement.

L'invention concerne également un dispositif de décodage adapté pour mettre en œuvre le procédé de décodage selon l'un quelconque des modes particuliers de réalisation définis ci-dessus. Ce dispositif de décodage pourra bien sûr comporter les différentes caractéristiques relatives au procédé de décodage selon l'invention. Ainsi, les caractéristiques et avantages de ce dispositif de décodage sont les mêmes que ceux du procédé de décodage, et ne sont pas détaillés plus amplement.

Corrélativement, l'invention concerne aussi un équipement terminal comprenant un module d'émission et un module de réception de données vers et en provenance d'un réseau de télécommunications, un dispositif de codage et un dispositif de décodage selon l'invention.

L'invention concerne encore un programme d'ordinateur comportant des instructions pour la mise en œuvre des étapes d'un procédé tel que décrit précédemment, lorsque ce programme est exécuté par un processeur.

L'invention concerne aussi un programme d'ordinateur comportant des instructions pour la mise en œuvre des étapes d'un procédé de décodage d'une image numérique tel que décrit précédemment, lorsque ce programme est exécuté par un processeur.

Ces programmes peuvent utiliser n'importe quel langage de programmation. Ils peuvent être téléchargés depuis un réseau de communication et/ou enregistrés sur un support lisible par ordinateur.

Des supports d'enregistrement, lisibles par un processeur, intégrés ou non au dispositif de codage d'une image numérique et au dispositif de décodage d'une image numérique selon l'invention, éventuellement amovibles, peuvent mémoriser respectivement un programme d'ordinateur mettant en œuvre un procédé de codage et un programme d'ordinateur mettant en œuvre un procédé de décodage, tels que décrits précédemment.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** illustre de façon schématique une séquence d'images découpées en blocs ;

- la figure **2** présente de façon schématique les étapes d'un procédé de codage d'images selon l'invention ;

- la figure **3** détaille l'étape de traitement d'un bloc courant ;

- les figures **4A** à **4C** illustrent de façon schématique les pixels du bloc courant et des blocs voisins déjà traités mis en œuvre pour l'évaluation d'une fonction de coût ;

- la figure **5** décrit de façon détaillée l'étape de prédiction de signes du bloc courant selon un exemple de mode de réalisation ;

- la figure **6** décrit de façon détaillée l'étape de prédiction d'une séquence de signes du bloc courant selon un mode de réalisation de l'invention ;

- la figure **7** présente de façon schématique les étapes d'un procédé de décodage d'une image selon l'invention ;

- la figure **8** détaille un exemple de méthode de sélection de la meilleure combinaison de signes au décodage selon l'invention ;

- la figure **9** présente de façon schématique la structure matérielle d'un dispositif de codage d'une image selon l'invention, lorsqu'il est intégré à un équipement terminal ; et

- la figure **10** présente de façon schématique la structure matérielle d'un dispositif de codage d'une image selon l'invention, lorsqu'il est intégré à un équipement terminal.

## 7. Description d'un mode de réalisation particulier de l'invention

Le principe général de l'invention concerne la prédiction de signes du bloc couran et repose sur une reconstruction du bloc décodé pour une combinaison de valeurs de signes à prédire basée sur une réutilisation des résultats obtenus pour des combinaisons de valeurs déjà évaluées. Plus précisément, l'invention consiste à calculer un vecteur de pixels décodés du bloc courant pour une hypothèse courante par combinaison d'au moins un vecteur de pixels décodés déjà calculé pour au moins une hypothèse précédente et d'au moins un vecteurs de pixels motif préalablement calculé.

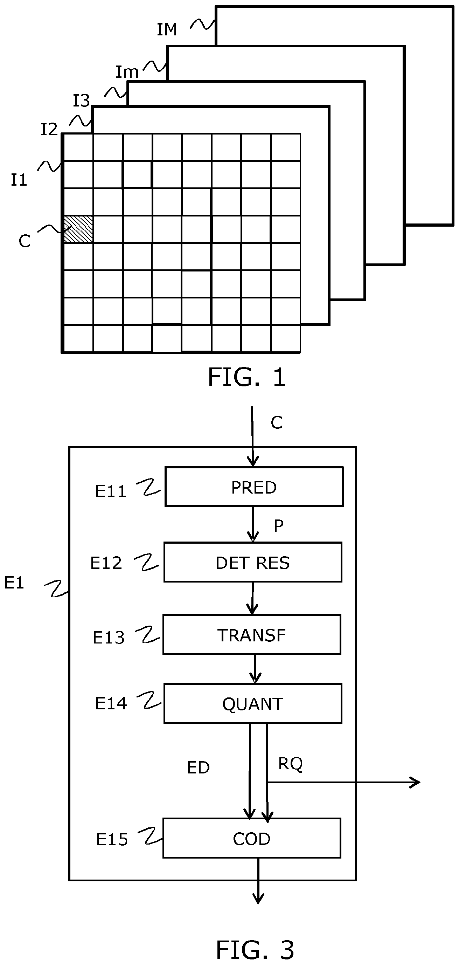

En relation avec la Figure **1**, on considère une vidéo originale constituée d'une suite d'images I1, I2, ...Im...IM, avec M entier non nul. Les images sont encodées et décodées dans un ordre prédéfini connu de l'encodeur et du décodeur, par exemple dans l'ordre temporel I1, puis I2, ..., puis IM (cet ordre peut différer suivant le mode de réalisation).

Lors de l'encodage d'une image, celle-ci est subdivisée en blocs C de taille maximale qui peuvent à leur tour être subdivisés en blocs plus petits.

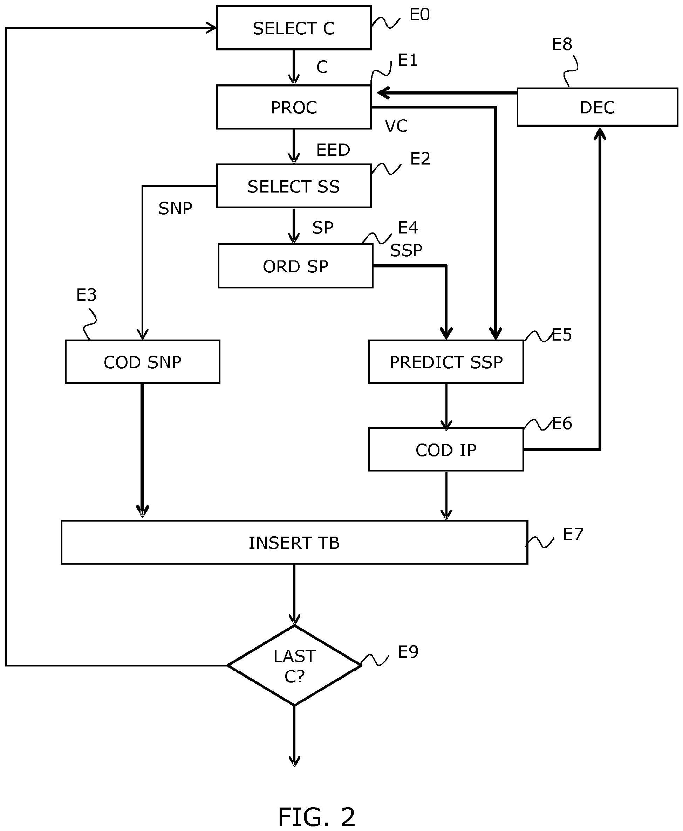

En relation avec la Figure **2**, on présente les étapes d'un procédé de codage d'une image Im selon l'invention. Au cours d'une étape E0, un premier bloc est sélectionné.

En E1, le bloc courant C subit une suite d'opérations E1 (application d'étapes de prédiction, calcul de résidu, quantification, codage entropique) qui vont maintenant être détaillées en relation avec la Figure **3**.

Par exemple, on sélectionne comme bloc courant C le premier bloc à traiter. Dans le mode préféré de réalisation, il s'agit du premier bloc (dans l'ordre lexicographique). Il comporte NxN pixels, avec N entier non nul, mais bien sûr, l'invention s'appliquerait de façon analogue à un bloc rectangulaire.

On suppose qu'il existe L découpes en bloc possible numérotées de 1 à L, et que la découpe utilisée sur le bloc C est la découpe numéro I. Par exemples, il peut y avoir 4 découpes possibles, en blocs de taille 4x4, 8x8, 16x16, et 32x32.

Par ailleurs, on notera ID l'image courante décodée (qui, dans un codeur vidéo, est construite dans le codeur de façon à permettre une prédiction de blocs suivants de la vidéo.

Au cours d'une étape E11, on détermine une prédiction P du bloc original C. Il s'agit d'un bloc de prédiction construit par des moyens connus, typiquement par compensation de mouvement (bloc issu d'une image de référence précédemment décodée), ou par prédiction intra (bloc construit à partir des pixels décodés immédiatement adjacents au bloc courant dans l'image ID). Les informations de prédiction liées à P sont codées dans le fichier compressé. On suppose ici qu'il y a K modes de prédiction possibles m1, m2,...,mK, et que le mode de prédiction choisi pour le bloc C est le mode mkj.

En E12, un bloc résidu original R est formé par différence entre le bloc courant et le bloc prédit R= C-P.

En E13, le résidu R est transformé par une transformée de type DCT ou transformée en ondelettes, connue en soi (REF norme JPEG pour la DCT, norme JPEG2000 pour la transformée en ondelettes), en un bloc appelé RT.

En E14, le résidu transformé RT est quantifié par des moyens de quantification classiques, par exemple de type scalaire ou vectorielle en un bloc résidu quantifié RQ. Ce bloc quantifié RQ contient NxN coefficients. De façon connue dans l'état de l'art, ces coefficients sont scannés dans un ordre prédéterminés de façon à constituer un vecteur monodimensionnel RQ[i] où l'indice i varie de 0 à $N^2-1$. L'indice i est appelé la fréquence du coefficient RQ[i]. Classiquement, ces coefficients sont scannés par ordre croissant de fréquence, par exemple selon un balayage diagonal comme décrit dans le document de Sole et al, intitulé « Transform Coefficient Coding in HEVC », publié dans la revue « IEEE TRANSACTIONS ON CIRCUITS AND SYSTEMS FOR VIDEO TECHNOLOGY, VOL. 22, NO. 12, en décembre 2012.

En E15, on code les informations d'amplitude des coefficients de RQ par codage entropique (codage de Huffman ou codage arithmétique). Par amplitude, on entend ici la valeur absolue du coefficient. Des moyens de codage des amplitudes sont par exemple décrits dans la norme HEVC (expliquée dans Sole J. et al., « Transform Coefficient Coding in HEVC », IEEE Transactions on Circuits and Systems for Video Technology, vol. 23, no. 12, December 2012).

Classiquement, on peut coder pour chaque coefficient une information représentative du fait que le coefficient est non nul. Ensuite, pour chaque coefficient non nul, une ou plusieurs informations relatives à l'amplitude sont codées.

Toutes les étapes vont maintenant être détaillées s'appliquent à l'information de signe. Toutefois, l'invention reste valable pour toute autre information descriptive de l'image compressée (élément de syntaxe). Par exemple, l'invention peut s'appliquer à l'information de signifiance (un élément de syntaxe représentatif de la valeur nulle ou non-nulle d'une amplitude de coefficient transformé), une information d'amplitude, une information de mode de codage (inter ou intra par exemple), etc.

En relation avec la Figure **2**, une étape E2 sélectionne les signes à prédire, dans le bloc courant, en fonction de probabilités connues a priori, comme décrit dans le document FR3023112 déjà cité. On dispose, dans l'encodeur, d'un ensemble de probabilités de détection correcte de signe, appelés aussi scores. Dans le mode préféré de réalisation, ces probabilités sont dépendantes de la taille du bloc courant C, de l'amplitude du coefficient associé au signe, de sa fréquence, et du mode de prédiction utilisé parmi les K modes possibles.

Ces probabilités ont été construites avant l'encodage et le décodage, soit par accumulation statistique sur un ensemble de signaux représentatifs des signaux à coder, soit par calcul mathématique à partir d'hypothèses sur la distribution des signes des coefficients.

Pour chaque coefficient RQ[i], on peut donc obtenir une probabilité de prédiction correcte du signe du coefficient RQ[i].

Avantageusement, les signes à prédire sont sélectionnés en conservant ceux dont la probabilité est supérieure à un seuil prédéterminé.

Au cours d'une étape E3, l'ensemble des signes SNP de RQ qui ne sont pas prédits sont codés de façon classique. Ainsi, il est connu dans la norme HEVC de transmettre chaque signe sous forme d'un élément binaire 0 ou 1, avec une convention associant l'un au signe plus et l'autre au signe moins.

Au cours d'une étape E4, les signes à prédire SP sont ordonnancés. Cet ordre peut être prédéfini : par exemple, dans l'ordre de scan des signes tel que défini dans la norme HEVC. Dans le mode préféré de réalisation, on ordonne les signes par probabilité de détection correcte décroissante. Ainsi, supposons que l'on dispose à ce stade d'une séquence de M signes ordonnés à prédire SP={s0, s1,...,sM-1}.

Au cours d'une étape E5, on prédit les M signes de la séquence SP.

Il s'agit de sélectionner la meilleure hypothèse de combinaison des valeurs de M signes de la séquence SP parmi $2^M$ hypothèses possibles. Par exemple, on évalue un coût associé à chaque hypothèse, à l'aide d'une fonction de coût FC et on choisit l'hypothèse qui minimise la fonction de coût.

Ainsi, pour une hypothèse donnée cette fonction FC produit un coût, par exemple FC({s1=+,s2=-,s3=-,...,sM-1=+}) = 4240.

Ici, l'hypothèse est -(+,-,-,...,+) et le coût résultant est 4240. Bien sûr, la fonction d'évaluation doit faire en sorte de générer un coût minimal lorsque l'hypothèse de signe est la plus vraisemblable.

Des fonctions de coût sont décrites dans l'état de l'art par exemple dans le document de Ponomarenko et al., intitulé « Prédiction of signs of DCT coefficients in block-based lossy image compression », publié dans Image Processing: Algorithms and Systems, Proceedings of the SPIE, Volume 6497 en février 2007, nous en rappelons le principe ici.

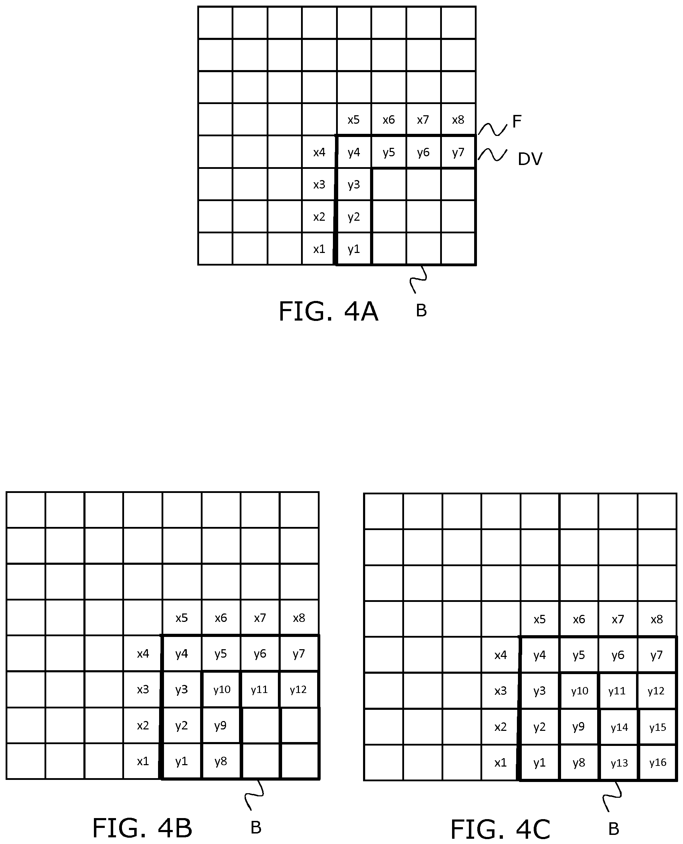

Par exemple, la fonction de coût mesure une distorsion le long de la frontière gauche et supérieure du bloc courant, comme illustré par la Figure **4A**. D'un côté d'une frontière du bloc courant C se trouvent les pixels y1 à y8 décodés issus des blocs traités précédemment, et de l'autre côté, les pixels x1 à x7 du bloc courant décodé avec l'hypothèse de signes dont on veut mesurer le coût.

Pour générer un bloc courant décodé correspondant à une hypothèse de signes, on procède de la façon suivante :

- On attribue à chaque coefficient du bloc résidu son signe réel (s'il s'agit d'un coefficient dont le signe n'est pas prédit), ou l'hypothèse de signe (s'il s'agit d'un coefficient dont le signe est à prédire).

- à l'aide de moyens classiques de déquantification et transformée inverse, on obtient un bloc de résidu décodé, en particulier les échantillons résidus {r1,r2,...,r7} voisins de la frontière du bloc avec des blocs précédemment décodés ;

- On leur ajoute ensuite le bloc prédit P, pour produire un bloc décodé DV.

On voit qu'il n'est pas nécessaire de reconstruire le bloc complet et qu'on peut se limiter à reconstruire les pixels x1 à x7 qui sont le long de la frontière. En relation avec la Figure **4A**, la fonction de coût FC est obtenue à partir du calcul d'une différence entre les valeurs des pixels x1 à x7 situés dans les blocs précédemment traités, et les pixels y1 à y7 situés sur la première ligne et la première colonne du bloc courant.

Bien sûr, d'autres mesures de coût peuvent être envisagées. Par exemple, une mesure de coût pourrait s'appuyer non seulement sur les pixels situés aux frontières, mais en plus sur les rangées de pixels intérieures, voisines des précédentes, tel qu'illustré par les Figures **4B** à **4C**. Ainsi, sur la figure 4B, la différence est calculée entre les valeurs des pixels des blocs précédemment traités, et les pixels y1 à y12 situés sur la première ligne, la première colonne ainsi que la deuxième ligne et la deuxième colonne du bloc courant. Par exemple, on évalue la différence entre y1 et x1 et y8 et x1 et, de façon similaire, entre y2 et x2 et yç et x2, etc.

Dans l'exemple représenté sur la Figure **4C**, la différence est calculée entre les valeurs des pixels situés dans les blocs précédemment traités, et l'ensemble des pixels du bloc courant.

Par la suite, nous appellerons VDk le vecteur constitué des pixels décodés du bloc courant servant à calculer la fonction de coût pour la kième hypothèse sur les signes.

Le vecteur VDk s'écrit VDk = P + VPHk, où P est le vecteur prédiction du bloc courant, ou, avantageusement un sous-vecteur restreint par exemple aux pixels y1 à y7 ou encore aux pixels y1 à y12 et VPHk est le vecteur résidu décodé correspondant à la kième hypothèse Hk sur les signes ou, un sous-vecteur restreint par exemple aux pixels y1 à y7 ou encore aux pixels y1 à y12.

Pour prédire la séquence de M signes du bloc courant, on génère à l'aide d'une fonction de coût FC les coûts associés à chaque hypothèse de combinaisons des valeurs de signes. Pour obtenir ces coûts, il est nécessaire de calculer les blocs résidus décodés associés à chaque hypothèse, donc les vecteurs de pixels VPH0 à VPH2$^M$.

Dans l'état de l'art il était nécessaire de recalculer entièrement ces vecteurs. Or ce processus est gourmand en calcul, en particulier parce que le calcul du vecteur résidu VPHk requiert à chaque fois l'application d'une transformée inverse, ce qui mobilise d'importantes ressources de calcul.

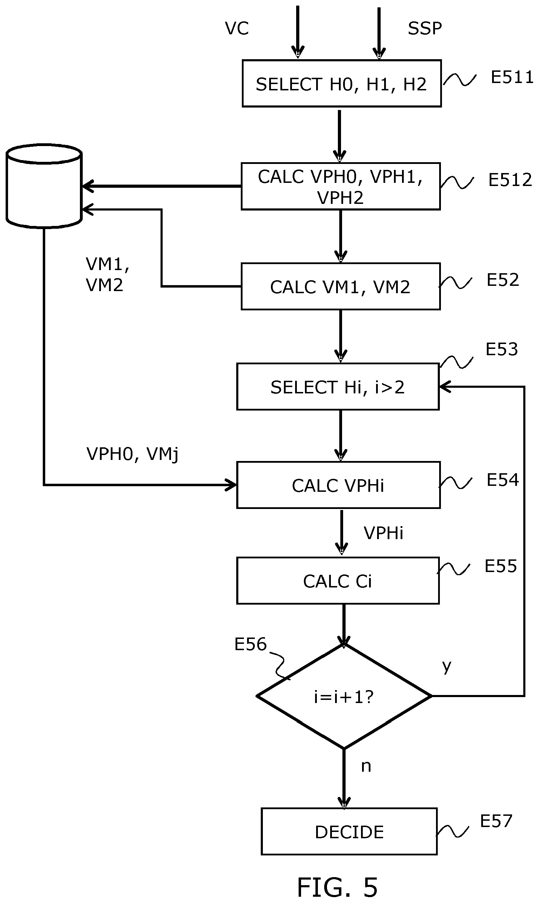

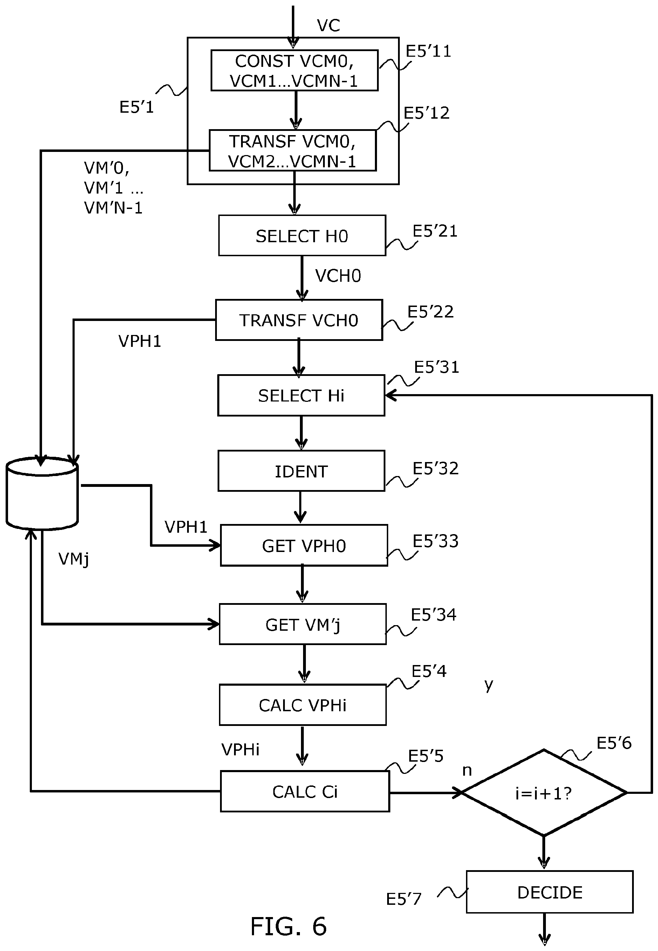

Deux modes de réalisation particuliers, permettant d'éviter d'avoir à calculer toutes ces transformées inverses vont maintenant être décrit en relation avec les figures **5** et **6**. Le mode de réalisation décrit en relation avec la figure 5 est présenté à titre d'exemple et n'est pas représentatif de l'invention telle que définie dans les revendications.

En relation avec la Figure **5**, on parcourt les hypothèses selon un ordre prédéterminé. Avantageusement, les hypothèses sont parcourues dans un ordre tel qu'entre deux hypothèses consécutives, le signe d'un seul coefficient change. Cet ordre est connu de l'homme de métier sous le nom de « code de Gray » ou « code binaire réfléchi ».

Dans le cas particulier où la séquence de signes à prédire comprend M=3 signes {s0,s1,s2}, les hypothèses seront examinées dans l'ordre suivant :

H0={+,+,+}

H1={+,+,-}

H2={+,-,+}

H3={+,-,-}

H4={-,+,+}

H5={-,+,-}

H6={-,-,+}

H7={-,-,-}

Au cours d'une étape E511, on considère d'abord deux premières hypothèses H0, H1 telles que leurs combinaisons ne diffèrent que par la valeur d'un seul et même signe, par exemple le premier. On a donc H0 = {+,+,+} et H1 = {+,+,-}. On calcule en E512 les vecteurs de pixels VPH0 et VPH1 associés à chacune de ces hypothèses par transformation inverse des vecteurs de coefficients obtenus à partir du vecteur de coefficients transformés VC du bloc courant en lui affectant les signes de l'hypothèse considérée. Les vecteurs VPH0 et VPH1 obtenus sont stockés en mémoire.

Au cours d'une étape E52, on calcule un premier vecteur motif VM2 par différence entre les vecteurs de pixels VPH0 et VPH1 associés aux hypothèses H0 et H1. On comprend que selon ce mode de réalisation, ce vecteur motif est associé à un changement de valeur du signe s2 et représente en quelque sorte un impact du changement du signe s2 entre la combinaison de signes de H0 et celle de H1 dans le domaine spatial.

On considère ensuite en E511 une troisième première hypothèse H2, selon l'ordre prédéterminé. Sa combinaison de signes vaut {+,-,+} et diffère de H0 par la valeur du signe s1. On calcule ensuite en E512 le vecteur de pixels correspondant VPH2 de façon classique, par application d'une transformée inverse et on le stocke en mémoire. On calcule aussi en E52 un deuxième vecteur motif VM1 par différence entre les vecteurs de pixels VPH0 et VPH2 associés aux hypothèses H0 et H2. Ce vecteur motif est associé au changement de signe du signe s1 entre les hypothèses H0 et H2. Il est stocké en mémoire.

Au cours d'une étape E53, on considère une quatrième hypothèse H3, dont la combinaison vaut {+,-,-}. Elle diffère de H2 par la valeur du signe s2

Avantageusement, on identifie quelle hypothèse précédemment calculée ne diffère que d'un signe avec l'hypothèse H3 courante, et de quel signe il s'agit. Dans le cas présent, on identifie H2 et le signe qui diffère entre la combinaison courante et celle de l'hypothèse H2 est le signe s2. On va chercher en mémoire le vecteur VPH0 et le vecteur motif VM2.

Selon l'invention, on construit en E54 un vecteur de pixels VPH3 associé à cette hypothèse H3 par combinaison linéaire du vecteur de pixels VPH0 et du vecteur motif VM2 de la façon suivante :

$$VPH3 = VPH0 + VM2$$

L'application d'une transformée inverse est ainsi évitée.

Selon une variante, le vecteur VPH0 et le vecteur motif VM2 à combiner sont obtenus dans une table prédéfinie et stockée en mémoire, de façon à éviter l'étape précédente d'identification.

En E55, on teste s'il reste des hypothèses à traiter. Si oui, pour les hypothèses suivantes on procède comme suit :
Considérons l'hypothèse H4 correspondant à la combinaison {-,+,+}.

On calcule son vecteur de pixels VPH4 par application d'une transformée inverse et on la stocke en mémoire.

On calcule un vecteur motif VM0 par différence vectorielle entre VPH4 et VPH0. Il est associé à un changement de signe du signe s0. On le stocke en mémoire pour un usage ultérieur.

Pour l'hypothèse H5 correspondant à la combinaison {-, +, -}, on calcule son vecteur de pixels VPH5 par combinaison linéaire de VPH4 et du vecteur motif VM2.

L'hypothèse H6 correspond à la combinaison {-,-,+}. On obtient son vecteur de pixels VPH6 par exemple par combinaison linéaire de VPH4 et du vecteur motif VM1. On pourrait aussi combiner VPH2 et VM0.

L'hypothèse H7 correspond à la combinaison {-,-,-}. On obtient son vecteur de pixels VPH7 par exemple par combinaison linéaire de VPH6 et du vecteur motif VM2.

On note que ce mode de réalisation met en œuvre 4 transformées pour 3 signes à prédire. Plus généralement, selon cette approche, si M signes sont à prédire, l'art antérieur requiert le calcul de $2^M$ transformées inverses, alors que la méthode proposée nécessite seulement M+1 transformées. L'invention permet donc une réduction de complexité substantielle. Par ailleurs, lorsqu'un vecteur de coefficients est décodé par ajout de vecteurs motifs, sa valeur est susceptible d'être légèrement différente de celle obtenue de façon classique par transformée inverse. Toutefois, l'erreur est en général négligeable et n'a pas d'impact sur l'efficacité de compression de la méthode de prédiction des signes.

En relation avec la Figure **6**, on décrit maintenant un mode de réalisation de l'invention.

On considère de nouveau une séquence de M = 3 signes à prédire SP ={s0,s1,S2}.

Au cours d'une étape préalable E5'11, on considère le vecteur de coefficients transformés VC du bloc résidu courant et on construit M = 3 vecteurs motifs de coefficients à partir du vecteur de coefficients transformés VC du bloc courant, de la façon suivante :

-    un vecteur motif de coefficients VMCj associé au signe sj, avec j entier compris entre 0 et 2, est de même dimension que le vecteur de coefficients VC et il est construit en conservant l'amplitude du coefficient du vecteur VC correspondant à la position du signe sj, tous les autres coefficients étant mis à zéro.

Concernant le signe du coefficient non nul, il peut être choisi arbitrairement. Par simplicité on lui attribue la valeur +. Dans ce cas, le coefficient du vecteur motif correspondant à la position du signe sj prend la valeur absolue du coefficient colocalisé dans le vecteur VC du bloc courant.

On suppose par exemple que le vecteurs de coefficients VC vaut {+4, 0, -2, -3, 0, +1, 0, 0, -1, 0, 0,...,0} et que les trois signes à prédire sont associés au premier, troisième et quatrième coefficients. Il s'agit donc de -(+,-,-}.

On obtient dans ce cas les 3 vecteurs motifs de coefficients VMC0, VMC1, VMC2 suivants :

-    VMC0 = {+4, 0, 0, 0, 0, 0, 0, 0, 0, 0, 0,...,0}
-    VMC1 = {0, 0, +2, 0, 0, 0, 0, 0, 0, 0, 0,...,0}
-    VMC2 = {0, 0, 0, +3, 0, 0, 0, 0, 0, 0, 0,...,0}

En E5'11, on transforme ces vecteurs motifs de coefficients en vecteurs motifs de pixels, VM'0, VM'1, VM'2 de façon classique, par application d'une transformée inverse classique. On les stocke en mémoire.

On note que, du fait que les vecteurs motifs de coefficients comportent un seul coefficient non nul, l'application de la transformée inverse engendre un coût de calcul très modéré. En effet, pour un bloc courant de taille NxN pixels dont tous les coefficients sont susceptibles n'être non nuls, il faut, pour une transformée inverse normale NxN projections sur des vecteurs de base de dimension NxN. Il faut donc $N^4$ multiplications et $N^4$ additions. En revanche, du fait qu'a priori un seul pixel est non nul, Il ne reste plus qu'une projection à réaliser, soit $N^2$ multiplications et $N^2$ additions.

En E5'21, on sélectionne une première hypothèse à traiter, selon un ordre de parcours prédéterminé des $2^M$ hypothèses, par exemple l'ordre du code de Gray.

Il s'agit dans ce cas de l'hypothèse H0 égale à {+,+,+}. On construit en E5'22 le vecteur de pixels VP0 associé par transformation inverse du vecteur de coefficient obtenus à partir du vecteur de coefficients transformés VC du bloc courant en lui affectant les signes de l'hypothèse H0. Le vecteur VPH0 obtenu est stocké en mémoire.

On traite maintenant les hypothèses suivantes en itérant la succession d'étapes suivantes, à partir de i=1 :

En E5'31, on considère une hypothèse Hi, par exemple H1.

H1 est associée à la combinaison {+,+,-}.

En E5'32, on identifie quelle hypothèse précédemment calculée ne diffère que d'un signe avec l'hypothèse courante, et de quel signe il s'agit. Dans le cas présent, l'hypothèse précédente identifiée est H0 et le signe qui diffère entre la combinaison courante et celle de l'hypothèse H0 est le signe s2.

En E5'33 on lit en mémoire le vecteur de pixels VPH0 associé à l'hypothèse H0 et en E5'34 on lit en mémoire le vecteur motif VM'2 associé au coefficient du vecteur VC portant le signe s2.

On note que selon une variante on obtient le vecteur de pixels VPH0 associé à l'hypothèse H0 et le vecteur motif VM'2 par lecture dans une table prédéfinie d'un enregistrement associé à l'hypothèse courante H1.

En E5'4, on construit le vecteur de pixels VPH1 associé à l'hypothèse H0 par combinaison linéaire du vecteur VP0 et du vecteur motif VM'2 de la façon suivante :

$$VPH1 = VPH0 - 2xVM'2$$

En E5'5, on teste s'il reste des hypothèses à traiter. Si oui, on incrémente i et on retourne à l'étape EE5'31.

Pour l'hypothèse H2 associée à la combinaison {+,-, +}, on identifie quelle hypothèse précédemment calculée ne diffère que d'un signe avec l'hypothèse courante, et de quel signe il s'agit. Dans le cas présent, l'hypothèse est H0 et le signe qui diffère entre la combinaison courante et celle de l'hypothèse H0 est le signe s1. On calcule VP2 par combinaison linéaire du vecteur VPH0 et du vecteur motif VM'1 de la façon suivante :

$$VPH2 = VPH0 - 2xVM'1$$

On stocke VPH2 en mémoire.

Pour l'hypothèse H3 associée à la combinaison {+,-, -}, identifie quelle hypothèse précédemment calculée ne diffère que d'un signe avec l'hypothèse courante, et de quel signe il s'agit. Dans le cas présent, l'hypothèse est H2 et le signe qui diffère entre la combinaison courante et celle de l'hypothèse H2 est le signe s2.

On calcule donc VPH3 par exemple par combinaison linéaire de VPH2 et de VM'2 de la façon suivante :

$$VPH3 = VPH2 - 2xVM'2$$

On stocke VPH3 en mémoire.

On note qu'on aurait pu aussi combiner VPH1 et VM'1.

Pour l'hypothèse H4 associée à la combinaison {-,+, +}, on calcule VPH4 par exemple par combinaison linéaire de VPH0 et de VM'0 de la façon suivante :

$$VPH4 = VPH0 - 2xVM'0$$

On stocke VPH4 en mémoire.

Pour l'hypothèse H5 associée à la combinaison {-,+, -}, on calcule VPH5 par combinaison linéaire de VPH4 et de VM'2 de la façon suivante :

$$VPH5 = VPH4 - 2xVM'2$$

On stocke VPH5 en mémoire.

Pour l'hypothèse H6 associée à la combinaison {-,-, +}, on calcule VPH6 par exemple par combinaison linéaire de VPH2 et de VM'0 de la façon suivante :

$$VPH6 = VPH2 - 2xVM'0$$

On stocke VPH6 en mémoire.

Pour l'hypothèse H7 associée à la combinaison {-,-, -}, on calcule VPH7 par exemple par combinaison linéaire de VPH3 et de VM'0 de la façon suivante :

$$VPH7 = VPH3 - 2xVM'0$$

On stocke VPH7 en mémoire.

Par simplicité, on a choisi dans cet exemple de privilégier les combinaisons d'un vecteur de pixels avec un vecteur motif parce qu'elles génèrent moins d'opérations, mais on remarque qu'on pourrait aussi combiner un vecteur avec deux vecteurs motifs quand l'hypothèse identifiée présente deux signes distincts de celui de l'hypothèse courante.

On note que ce mode de réalisation met en œuvre lui aussi 4 transformées pour 3 signes à prédire. En outre les transformées mises en œuvre pour calculer les M vecteurs motifs VM'j sont peu complexes, vus que les vecteurs motifs de coefficients VMCj ne comprennent qu'un coefficient non nul. Ce deuxième mode de réalisation est donc encore plus économe en opérations que le précédent.

On dispose maintenant des vecteurs ou sous-vecteurs de pixels VPHi du bloc courant pour chacune des hypothèses de combinaisons de signes.

On calcule au cours d'une étape E56 les coûts associés à chacune des hypothèses à partir des vecteurs obtenus et d'une fonction de coût FC.

Au cours d'une étape suivante E57, il s'agit de décider de la séquence prédite à partir des coûts qui viennent d'être calculés. Il existe différentes approches pour exploiter les coûts associés à chacune des hypothèses. Un exemple de méthode va maintenant être détaillé.

On itère les sous-étapes suivantes :
Première itération (codage du premier signe)

A l'aide de la fonction de coût FC, on génère les coûts correspondant à chaque hypothèse possible pour l'ensemble des signes à prédire. Ainsi, supposons que le nombre de signe à prédire est M=3, et que la séquence de signes à prédire est SP={s0,s1,s2}. On va générer les coûts suivants :

$$C0=FC(\{+,+,+\})$$

$$C1=FC(\{+,+,-\})$$

$$C2=FC(\{+,-,+\})$$

$$C3=FC(\{+,-,-\})$$

$$C4=FC(\{-,+,+\})$$

$$C4=FC(\{-,+,-\})$$

$$C6=FC(\{-,-,+\})$$

$$C7=FC(\{-,-,-\})$$

On commence par identifier l'hypothèse qui a obtenu le coût minimal. Supposons qu'il s'agisse de H3. Alors, le premier signe dans l'ordre prédéfini s0 est prédit par la valeur qu'il a dans la combinaison de H3 : il s'agit d'un +. Ensuite, la valeur prédite est comparée à la valeur réelle de s0 dans le vecteur de pixels réel du bloc courant.

Cette comparaison permet de définir la valeur d'un indicateur de prédiction IP destiné à être codé puis transmis dans le train binaire.

Comme décrit dans le document FR3023112, cet indicateur indique si le signe prédit s0 est égal ou différent du signe réel (par exemple, respectivement 0 ou 1). Si on reprend l'exemple précédent {+4, 0, -2, -3, 0, +1, 0, 0, -1, 0, 0,...,0}, c'est un +. Il y a alors codage d'un indicateur 0. Cette valeur IPs0 est stockée en mémoire.

Au cours d'une deuxième itération (codage du deuxième signe s1), on élimine les coûts pour lesquels s0 n'a pas sa valeur réelle. Ici, la valeur réelle de s0 est +, donc on conserve les coûts suivants :

$$C1=FC(\{+,+,+\})$$

$$C2=FC(\{+,+,-\})$$

$$C3=FC(\{+,-,+\})$$

$$C4=FC(\{+,-,-\})$$

Nous avons ainsi les 4 coûts correspondant aux 4 hypothèses possibles sur les signes qui restent à prédire. On va identifier le coût minimal : supposons qu'il s'agisse de C3. Alors, le deuxième signe dans l'ordre prédéfini s1 est prédit par la valeur qu'il a dans la combinaison de H3 : il s'agit d'un -. Ensuite, la valeur prédite est comparée à la valeur réelle de s1. Dans notre exemple, la valeur réelle est un -. Il y a alors codage d'un indicateur IP égal à 0. Cette valeur IPs1 est stockée en mémoire.

Au cours d'une troisième itération (codage du dernier signe s2), on élimine les coûts pour lesquels s2 n'a pas sa valeur réelle. Ici, la valeur réelle de s2 est -, donc on conserve les coûts suivants :

$$C3=FC(\{+,-,+\})$$

$$C4=FC(\{+,-,-\})$$

Nous avons les 2 coûts correspondant aux 2 hypothèses possibles sur le signe qui reste à prédire. On va identifier le coût minimal : supposons qu'il s'agisse de C4. Alors, le dernier signe dans l'ordre prédéfini s2 est prédit par la valeur qu'il a dans la combinaison de H4 : il s'agit d'un -. Ensuite, la valeur prédite est comparée à la valeur réelle de s3. Dans notre exemple, il s'agit d'un -. L'indicateur IP est donc fixé à la valeur IPs3 = 0 pour le signe s3.

On a maintenant terminé l'étape de prédiction E5 et on dispose d'une prédiction des signes du bloc résidu courant.

En relation avec la Figure **2**, on continue le codage du bloc courant.

En E6, on code les valeurs d'indicateurs IP décidées au cours de l'étape précédente de prédiction de signe. Du fait que seuls sont prédits les signes qui sont associés à un score représentatif d'un niveau de fiabilité suffisant, l'indicateur de prédiction prend plus souvent la valeur 1 que la valeur 0. Ceci est mis à profit par le codage entropique pour réduire la taille du signal compressé.

Avantageusement, le codage entropique tient compte du score $S_j$ associé au signe prédit pour coder l'indicateur IP. Par exemple, dans le mode de réalisation de l'invention selon lequel le score a une valeur comprise entre 0 (faible fiabilité de la prédiction) et 10 (haute fiabilité de la prédiction), le codage entropique des indicateurs est paramétré en tenant compte du score, de façon à exploiter la répartition plus ou moins uniforme des indicateurs. Par exemple, on utilise un codage entropique de type CABAC, connu de la norme HEVC, en initialisant les probabilités utilisées dans CABAC en fonction des scores prédéterminés.

En E7, on reconstruit le bloc décodé en appliquant au résidu quantifié RQ les étapes de déquantification et transformée inverse (connues en soi). On obtient un bloc résidu décodé RD. On ajoute à RD le bloc prédicteur P pour obtenir le bloc décodé BD.

Au cours de cette étape on vient également ajouter le bloc décodé BD à l'image reconstruite ID. Ceci permet de disposer dans le codeur d'une version décodée de l'image courante. Cette version décodée est utilisée dans notamment au cours de l'étape de construction d'une prédiction des signes sélectionnés pour être prédits.

En E8 on insère les valeurs codées dans le train binaire TB.

En E9, on vient tester si le bloc courant est le dernier bloc à traiter par l'unité de codage, compte tenu de l'ordre de parcours défini précédemment. Si oui, l'unité de codage a terminé son traitement. Si non, l'étape suivante est l'étape de sélection du bloc suivant.

Au cours de l'étape E0 on vient sélectionner le bloc suivant à traiter par l'unité de codage, suivant le parcours défini précédemment. Ce bloc devient le bloc courant à traiter, et l'étape suivante est l'étape de traitement E1 du bloc courant.

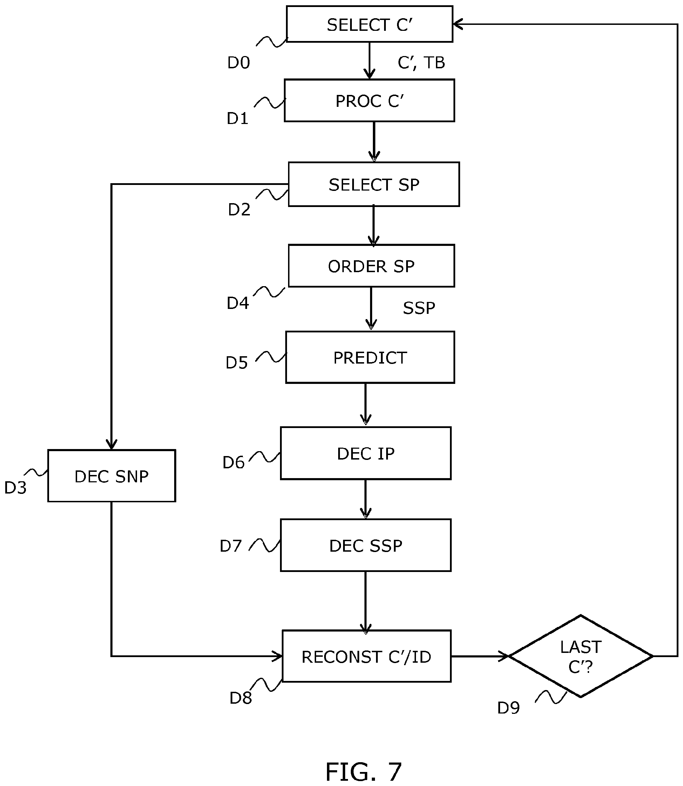

En relation avec la Figure **7**, on présente maintenant les étapes du procédé de décodage d'une image numérique codée selon un exemple de réalisation de l'invention. On suppose qu'un train binaire TB a été reçu par un dispositif de décodage mettant en œuvre le procédé de décodage selon l'invention. En variante, le dispositif de décodage obtient un fichier compressé FC.

En D0, on commence par sélectionner comme bloc courant C' le premier bloc à traiter. Par exemple, il s'agit du premier bloc (dans l'ordre lexicographique). Ce bloc comporte par exemple NxN pixels. Comme déjà évoqué pour le codage, l'invention s'appliquerait aussi à un bloc rectangulaire.

En D1, on traite le bloc C' courant en mettant en œuvre le schéma de décodage, correspondant au schéma de codage utilisé par l'encodeur, par exemple tel que spécifié dans la norme HEVC. En particulier, au cours de cette étape, on identifie un ensemble d'éléments ED de description des données à décoder pour le bloc courant C'.

On réalise en outre une prédiction P' du bloc à décoder C'. Les informations de prédiction liées à P' sont lues dans le train binaire ou fichier compressé et décodées. On décode donc l'information de mode de prédiction mj.

On décode aussi les informations d'amplitude du résidu à décoder RQ' sont lues dans le train binaire ou le fichier compressé et décodées. On connait donc maintenant les amplitudes des RQ'[i], mais pas encore les signes.

En D2, le procédé de décodage selon l'invention met en œuvre l'étape de sélection des signes à prédire parmi les éléments de description identifiés. Cette étape a déjà été décrite en détails pour le procédé de codage en relation avec la Figure **2**. Les signes à prédire sont avantageusement sélectionnés en fonction de scores prédéterminés. Un sous-ensemble SP est obtenu.

Au cours d'une étape D3, le procédé lit dans le train binaire TB les données codées relatives aux signes des coefficients du bloc courant non prédits et les décode avec des moyens adaptés à ceux utilisés lors du codage (typiquement décodage binaire). En particulier, le décodage entropique utilise la probabilité pi obtenue précédemment.

En D4, on ordonne les éléments de l'ensemble SP obtenu en une séquence initiale SSP, par exemple par scores décroissants, comme déjà décrit pour le procédé de codage selon l'invention.

En D5, on prédit les valeurs de signes de la séquence SSP. Pour ce faire on sélectionne la meilleure combinaison au sens d'une fonction de coût FC, parmi les combinaisons de valeurs possibles de la séquence courante SP. Comme déjà évoqué pour le procédé de codage, il existe plusieurs fonctions de coût. Dans la suite, on utilise la même que celle du procédé de codage, par exemple une mesure de distorsion le long d'une frontière avec des blocs précédemment traités et on sélectionne la combinaison de valeurs qui minimise cette mesure.

Pour obtenir les coûts associés aux $2^M$ combinaisons de signes de chaque hypothèse, il est nécessaire de calculer des vecteurs de pixels VPHi correspondant aux valeurs du bloc résidu courant pour la combinaison de signes de l'hypothèse Hi.

Dans l'état de l'art il était nécessaire de recalculer entièrement ces vecteurs. Ce processus est gourmand en calcul, en particulier parce que, dans le calcul du vecteur résidu VPHi, cela nécessite à chaque fois l'application d'une transformée inverse, ce qui nécessite d'importantes ressources de calcul.

Afin d'éviter d'avoir à calculer toutes ces transformées inverses, on applique de nouveau l'invention décrite en relation avec les Figures **4**, 5 (à titre d'exemple), par exemple en mettant en œuvre un des deux modes de réalisation déjà décrits en relation avec les Figures **5** (à titre d'exemple) et **6**.

En D6, on décode les valeurs des indicateurs de prédiction IP lues dans le train binaire ou le fichier compressé pour les signes de la séquence SP.

En D7, on reconstruit les signes décodés à partir des valeurs d'indicateurs IP décodées et des valeurs prédites.

On passe ensuite à l'étape D8 de reconstruction du bloc courant C' à partir des éléments de description décodés, EP prédits ($D_5$) et ENP non prédits ($D_3$), des informations d'amplitude des coefficients du bloc résidu RQ' et de la prédiction P' obtenus en $D_1$.

Pour ce faire, on commence par déquantifier le bloc RQ' pour obtenir un bloc déquantifié. Ceci est réalisé par des moyens adaptés à la quantification utilisée lors du codage (déquantification scalaire, déquantification vectorielle...), connus de l'homme de métier.

On applique ensuite au résidu déquantifié une transformée inverse de celle utilisée au codage. On obtient alors le résidu décodé.

On reconstruit enfin le bloc décodé BD' en ajoutant le résidu décodé à la prédiction P'.

Ce bloc est intégré à l'image en cours de décodage.

Au cours d'une étape D9, on vient tester si le bloc courant est le dernier bloc à traiter, compte tenu de l'ordre de parcours des blocs, défini précédemment. Si oui, le décodage est terminé. Si non, l'étape suivante est l'étape $D_0$ de sélection du bloc suivant et les étapes du procédé de décodage sont répétées.

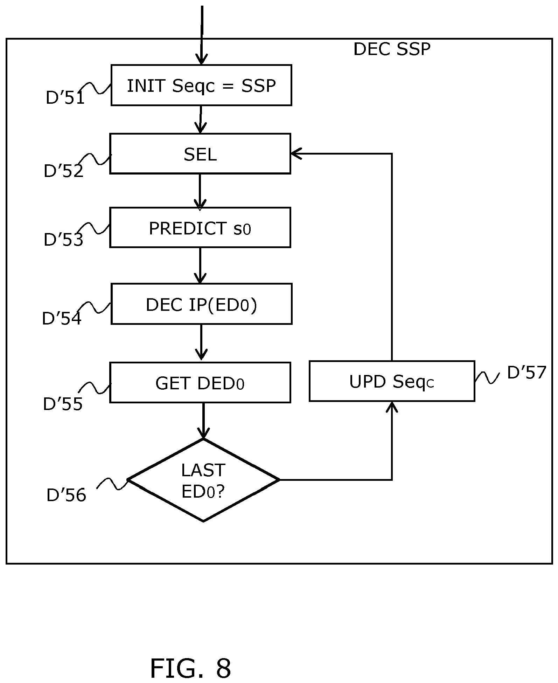

Selon un mode de réalisation de l'invention qui va maintenant être détaillé en relation avec la Figure **8**, les étapes D5 de prédiction et D6 de décodage des signes de la séquence SSP sont combinées en une seule étape D'5 :
En D'5$_1$ on considère une séquence courante Seq$_c$ que l'on initialise à la séquence initiale SP.

Les étapes suivantes (D'5$_2$ à D5'$_6$) forment une boucle itérative qui sera répétée plusieurs fois, en fonction du nombre M de signes à prédire sélectionnés dans la séquence Seq$_c$.

En D'5$_2$, on sélectionne la meilleure combinaison au sens d'une fonction de coût FC, la même que celle utilisée par le procédé de codage qui a produit le train binaire à décoder, parmi les combinaisons de valeurs possibles de la séquence courante SP.

Au cours d'une première itération, on décode le premier signe de la séquence Seq$_c$. A l'aide de la fonction de coût, on génère les coûts correspondant à chaque hypothèse ou combinaison possible pour l'ensemble des signes à prédire, en utilisant la solution de l'invention, qui vient d'être décrite en relation avec la Figure **7**.

Ainsi, supposons que le nombre de signes à prédire soit égal à M=3, et Seq$_c$={s$_0$,s$_1$,s$_2$}. On va générer les coûts suivants :

$$C_0=FC(\{+,+,+\})$$
$$C_1=FC(\{+,+,-\})$$
$$C_2=FC(\{+,-,+\})$$
$$C_3=FC(\{+,-,-\})$$
$$C_4=FC(\{-,+,+\})$$
$$C_5=FC(-,+,-)$$
$$C_6=FC(\{-,-,+\})$$
$$C_7=FC(\{-,-,-\})$$

Ce sont les 8 coûts correspondant aux 8 hypothèses possibles sur les signes à prédire. On suppose que le coût minimal est C$_2$.

En D'5$_3$, on prédit la valeur du premier signe s0 par sa valeur dans la combinaison correspondant à l'hypothèse H2. Il s'agit d'un +.

En D'5$_4$, on décode l'indicateur de prédiction IP correspondant à ce premier signe s0, à partir de données codées extraites du train binaire ou fichier compressé. Cet indicateur indique si le signe prédit a été correctement prédit ou non. Par exemple, on suppose que la valeur décodée est un 0 et qu'elle est associée à une prédiction correcte.

En D'5$_5$, on en déduit que la valeur décodée du signe s0 est un +.

En D'5$_6$, on teste si le signe s0 est le dernier de la séquence courante. Si c'est le cas, le traitement s'achève. Sinon, on met à jour la séquence courante en D5$_7$ en supprimant l'élément s0 qui vient d'être décodé.

Au cours d'une deuxième itération, on traite le deuxième élément s$_1$, devenu premier de la séquence courante.

En D'5$_2$, on considère les combinaisons Cb$_k$, pour lesquelles s$_0$ a sa valeur décodée, les autres étant éliminées.

Dans l'exemple considéré, la valeur réelle de s$_0$ est -, donc on compare les coûts suivants :

$$C_0=FC(\{+,+,+\})$$
$$C_1=FC(\{+,+,-\})$$
$$C_2=FC(+,-,+)$$
$$C_3=FC(\{+,-,-\})$$

Ces 4 coûts correspondent aux 4 hypothèses possibles sur les signes qui restent à prédire, connaissant la valeur décodée de celui qui a déjà été traité.

C$_1$ est identifié comme le coût minimal.

En D'5$_3$, on prédit s$_1$ par sa valeur dans la combinaison de l'hypothèse H1, c'est-à-dire un +.

En D'5$_4$, on décode l'indicateur IP correspondant à s1 à partir des données codées extraites du train binaire ou fichier compressé. Un indicateur est décodé, qui indique si le signe prédit est égal ou différent du signe réel. Dans notre exemple, supposons que la valeur décodée de IP soit 0, ce qui signifie que la prédiction de ce signe est correcte.

En D'5$_5$, on en déduit que s1 vaut -.

En D'5$_6$, on teste si s1 est le dernier élément. Comme ce n'est pas le cas, on met à jour la séquence courante en D$_{57}$, en supprimant s1. La nouvelle séquence Seq$_c$ est réduite à l'élément s$_2$.

Au cours d'une troisième et dernière itération, on décode le dernier signe s$_2$.

En D'5$_2$, on considère les combinaisons de valeurs de la séquence initiale Seq$_i$ pour lesquelles les éléments de description déjà traités s0 et s1 prennent leur valeur décodée.

On compare donc les coûts suivants :

$$C_2=FC(\{+,-,+\})$$
$$C_3=FC(\{+,-,-\})$$

On identifie C$_3$ comme le coût minimal.

Alors, le dernier signe s$_2$ dans l'ordre prédéfini est prédit, en D5$_3$, par sa valeur dans la combinaison de l'hypothèse H3 : il s'agit d'un -.

Ensuite, un indicateur IP associé au signe s$_2$ est décodé en D5$_4$. Il indique si le signe s$_2$ a été correctement prédit ou non. Dans notre exemple, supposons que la valeur décodée soit 0, ce qui correspond à une prédiction correcte.

On en déduit en D'$_{55}$ que la valeur décodée de s$_2$ est le signe +.

En D'5$_6$, on constate que s$_2$ est le dernier élément à traiter.

Comme pour l'encodage, on notera que l'invention ne se limite pas au mode de réalisation qui vient d'être présenté. D'autres choix d'implémentation peuvent être faits, comme par exemple celui que conserver la séquence à sa longueur initiale, de mettre à jour l'indice de l'élément courant, initialisé au premier élément de description ED$_0$ et de mettre fin aux itérations une fois le dernier élément ED$_{M-1}$ traité.

Selon ce mode de réalisation de l'invention, du fait que tous les éléments de la séquence initiale sélectionnés en fonction des scores prédéterminés sont prédits, on sait donc dès l'issue de l'étape D$_2$ combien d'indicateurs de prédiction IP sont à extraire du train binaire ou du fichier compressé. On comprend que cela permet d'implémenter une mise en œuvre de l'invention qui décorrèle les opérations de lecture et d'analyse des données codées contenues dans le train binaire ou fichier compressé (pour « parsing », en anglais) des opérations de traitement du bloc courant conformément au schéma de codage/décodage mis en œuvre. Par exemple, on pourrait organiser le décodage en utilisant un composant spécifique pour l'analyse/lecture des données codées dans le train binaire et un autre pour les opérations de reconstruction des blocs décodés. Un avantage de cette indépendance de parsing est de permettre une parallélisation des opérations de décodage.

Les procédés de codage et de décodage décrits précédemment peuvent être intégrés dans des codeurs/décodeurs vidéo standards tels que HEVC/H.265, AVC/H.264 ou tout type de codeurs/décodeurs vidéo propriétaires. Les procédés de codage et de décodage selon l'invention s'appliquent également à tous types de codeurs/décodeurs d'images fixes et plus généralement de signaux utilisant un codage prédictif.

Les procédés de codage et de décodage ont été décrits précédemment dans le cas de la prédiction des signes des coefficients d'un bloc résidu de l'image à coder/décoder. Ces procédés s'appliquent aisément au cas de la prédiction d'un autre élément de description du bloc par exemple.

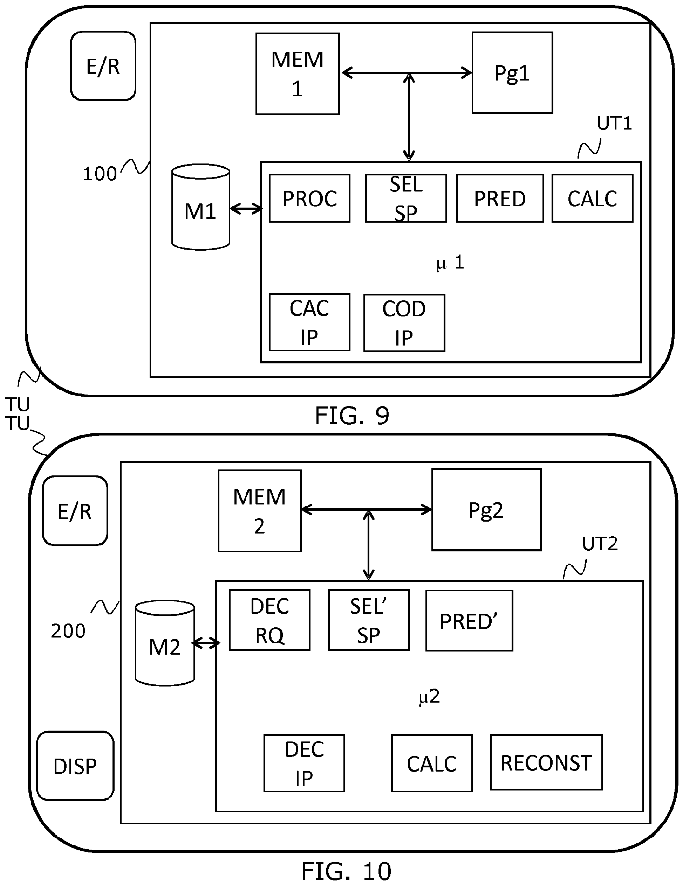

La figure 9 présente la structure simplifiée d'un dispositif de codage 100 adapté pour mettre en œuvre le procédé de codage selon l'un quelconque des modes particuliers de réalisation de l'invention. Le dispositif de codage 100 est adapté pour coder au moins une image sous la forme d'un flux de données codées, ladite image étant découpée en blocs. Le dispositif de codage 100 est notamment configuré pour:

- Traiter un bloc courant destiné à fournir un vecteur de coefficients transformés;
- Sélectionner une séquence de N signes de coefficients à prédire dans le vecteur de coefficients, avec N entier supérieur ou égal à 2;

- Prédire des valeurs des signes de la séquence à partir d'une pluralité d'hypothèses de combinaisons et d'une fonction de coût ;
- Pour un signe de la séquence, coder un indicateur représentatif d'une différence entre sa valeur réelle et sa valeur prédite ;

Selon l'invention la prédiction comprend:

- l'obtention d'au moins un vecteur motif de dimension égale à celle d'un vecteur de coefficients, à partir du vecteur de coefficients transformés ;

- pour d'au moins une première hypothèse, l'obtention d'un vecteur virtuel de pixels par transformation d'un vecteur de coefficients associé à la première hypothèse ; et

- pour au moins une deuxième hypothèse, dite hypothèse courante :

  - l'obtention d'un vecteur de pixel associé à l'hypothèse courante, distincte de la première, par combinaison linéaire d'au moins un vecteur de pixels associé à la première hypothèse et du au moins un vecteur motif;
  - le calcul de la fonction de coût pour l'hypothèse courante à partir du vecteur de pixels obtenu.

Le dispositif 100 est en outre configuré pour mettre en œuvre les différents modes de réalisation de l'invention qui viennent d'être décrits en relation avec les figures **2**, **5** (à titre d'exemple) et **6**.

Selon un mode particulier de réalisation de l'invention, les étapes du procédé de codage sont mises en œuvre par des instructions de programme d'ordinateur. Pour cela, le dispositif de codage 100 a l'architecture classique d'un ordinateur et comprend notamment une mémoire MEM1, une unité de traitement UT1, équipée par exemple d'un microprocesseur µ1, et pilotée par le programme d'ordinateur Pg1 stocké en mémoire MEM1. Le programme d'ordinateur Pg1 comprend des instructions pour mettre en œuvre les étapes du procédé de codage tel que décrit ci-dessus, lorsque le programme est exécuté par le processeur PROC.

A l'initialisation, les instructions de code du programme d'ordinateur Pg1 sont par exemple chargées dans une mémoire RAM avant d'être exécutées par le processeur PROC. Le processeur µ1 de l'unité de traitement UT1 met notamment en œuvre les étapes du procédé de codage décrit ci-dessus, selon les instructions du programme d'ordinateur Pg1.

Selon un autre mode particulier de réalisation de l'invention, le procédé de codage est mis en œuvre par des modules ou unités fonctionnel(le)s. Pour cela, le dispositif de codage 100 comprend en outre les modules suivants:

- Traitement (PROC) d'un bloc courant destiné à fournir un vecteur de coefficients transformés ;
- Sélection (SEL SP) d'une séquence de N signes de coefficients à prédire dans le vecteur de coefficients, avec N entier supérieur ou égal à 2;
- Prédiction (PRED) des valeurs des signes de la séquence à partir d'une pluralité d'hypothèses de combinaisons et d'une fonction de coût ;
- Pour un signe de la séquence, codage (COD IP) d'un indicateur représentatif d'une différence entre sa valeur réelle et sa valeur prédite ;

Selon l'invention, le module de prédiction comprend les unités suivantes :

pour au moins une deuxième hypothèse, dite hypothèse courante :

- Obtention d'un vecteur de pixels associé à l'hypothèse courante, par combinaison linéaire d'au moins un vecteur de pixels associé à une première hypothèse et obtenu par transformation d'un vecteur de coefficients comprenant les signes de la combinaison de la première hypothèse et d'au moins un vecteur motif obtenu à partir du vecteur de coefficients transformés ; et
- Calcul de la fonction de coût pour l'hypothèse courante à partir du vecteur de pixels obtenu.

L'unité de traitement UT1 coopère avec les différents modules fonctionnels décrits ci-dessus et la mémoire MEM1 afin de mettre en œuvre les étapes du procédé de codage.

Selon un mode de réalisation de l'invention, le dispositif 100 comprend en outre une unité $M_1$ de stockage des contextes de codage des coefficients, des scores prédéterminés associés à chacun de ces contextes, les vecteurs de pixels associés aux $2^M$ hypothèses pour la séquence de signes à prédire, leurs coûts associés, ainsi que les vecteurs motifs à partir desquels on obtient les vecteurs de pixels.

Ces unités sont pilotées par le processeur $\mu_1$ de l'unité de traitement 110.

De façon avantageuse, un tel dispositif 100 peut être intégré à un équipement terminal d'utilisateur TU, tel qu'un encodeur, un ordinateur personnel, une tablette, une caméra numérique, un téléphone mobile intelligent (pour « smartphone », en anglais), etc. Le dispositif 100 est alors agencé pour coopérer au moins avec le module suivant du terminal TU :

- un module E/R d'émission/réception de données, par l'intermédiaire duquel le train binaire TB ou le fichier compressé FC est transmis dans un réseau de télécommunications, par exemple un réseau filaire, radio, ou hertzien.

Les différents modules fonctionnels décrits ci-dessus peuvent être sous forme matérielle et/ou logicielle. Sous une forme logicielle, un tel module fonctionnel peut comprendre un processeur, une mémoire et des instructions de code de programme pour mettre en œuvre la fonction correspondante au module lorsque les instructions de code sont exécutées par un le processeur. Sous une forme matérielle, un tel module fonctionnel peut mis en œuvre par tout type de circuits d'encodage adaptés, tels que par exemple et de manière non limitative des microprocesseurs, des processeurs de traitement du signal (DSP pour Digital Signal Processor en anglais), des circuits intégrés spécifiques à des applications (ASICs pour Application Specific Integrated Circuit en anglais), des circuits FPGA pour Field Programmable Gâte Arrays en anglais, un câblage d'unités logiques. La figure **10** présente la structure simplifiée d'un dispositif de décodage 200 adapté pour mettre en œuvre le procédé de décodage selon l'un quelconque des modes particuliers de réalisation de l'invention qui viennent d'être décrits en relation avec les Figures **7**, **8**, **5** (à titre d'exemple) et **6**. Le dispositif de décodage 200 est adapté pour décoder un flux de données codées représentatif d'au moins une image, ladite image étant découpée en blocs. Le dispositif de décodage 200 est notamment configuré pour:

- Décoder (DEC RQ) des amplitudes des coefficients du vecteur de coefficients transformés d'un bloc courant, extraites du train binaire (TB);
- Sélectionner (SEL' SP) une séquence de N signes de coefficients à prédire dans le vecteur de coefficients, avec N entier supérieur ou égal à 2;
- Prédire (PRED') des valeurs des signes de la séquence à partir d'une pluralité d'hypothèses de combinaisons et d'une fonction de coût ;
- Décoder (DEC IP) des valeurs d'un indicateur de prédiction des signes sélectionnés à partir de données codées extraites du train binaire, l'indicateur de prédiction d'un signe étant représentatif d'une différence entre sa valeur réelle et sa valeur prédite ;
- Calculer (CALC) des valeurs décodées des signes sélectionnés à partir des valeurs d'indicateurs de prédiction décodées;
- Reconstruire (RECONST) des coefficients du bloc à partir des amplitudes décodées et des signes décodés;

Selon l'invention, la prédiction comprend en outre :

pour au moins une deuxième hypothèse, dite hypothèse courante :

- Obtention d'un vecteur de pixels associé à l'hypothèse courante, par combinaison linéaire d'au moins un vecteur de pixels associé à une première hypothèse et obtenu par transformation d'un vecteur de coefficients comprenant les signes de la combinaison de la première hypothèse et d'au moins un vecteur motif obtenu à partir du vecteur de coefficients transformés ; et

- Calcul de la fonction de coût pour l'hypothèse courante à partir du vecteur de pixels obtenu.

Selon un mode particulier de réalisation de l'invention, le dispositif de décodage 200 a l'architecture classique d'un ordinateur et comprend notamment une mémoire MEM2, une unité de traitement UT2, équipée par exemple d'un microprocesseur μ2, et pilotée par le programme d'ordinateur Pg2 stocké en mémoire MEM2. Le programme d'ordinateur Pg1 comprend des instructions pour mettre en œuvre les étapes du procédé de décodage tel que décrit ci-dessus, lorsque le programme est exécuté par le processeur μ2.

A l'initialisation, les instructions de code du programme d'ordinateur Pg2 sont par exemple chargées dans une mémoire RAM avant d'être exécutées par le processeur μ2. Le processeur μ2 de l'unité de traitement UT0 met notamment en œuvre les étapes du procédé de décodage décrit ci-dessus, selon les instructions du programme d'ordinateur Pg2.

Selon un autre mode particulier de réalisation de l'invention, le procédé de décodage est mis en œuvre par des modules fonctionnels. Pour cela, le dispositif de décodage 200 comprend en outre les modules suivants :

- Décodage (DEC C) des amplitudes des coefficients du vecteur de coefficients transformés d'un bloc courant, extraites du train binaire (TB);
- Sélection (SEL' SP) d'une séquence SP de M signes de coefficients à prédire dans le vecteur de coefficients, avec N entier supérieur ou égal à 2;
- Prédiction (PRED') des valeurs des signes de la séquence à partir d'une pluralité d'hypothèses de combinaisons et d'une fonction de coût ;
- Décodage (DEC IP) des valeurs d'un indicateur de prédiction des signes sélectionnés à partir de données codées extraites du train binaire, l'indicateur de prédiction d'un signe étant représentatif d'une différence entre sa valeur réelle et sa valeur prédite ;
- Calcul (CALC) des valeurs décodées des signes sélectionnés à partir des valeurs d'indicateurs de prédiction décodées;
- Reconstruction (RECONST) des coefficients du bloc à partir des amplitudes décodées et des signes décodés;

Selon l'invention, le module de prédiction comprend en outre :
pour au moins une deuxième hypothèse, dite hypothèse courante :

- Obtention d'un vecteur de pixels associé à l'hypothèse courante, par combinaison linéaire d'au moins un vecteur de pixels associé à une première hypothèse et obtenu par transformation d'un vecteur de coefficients comprenant les signes de la combinaison de la première hypothèse et d'au moins un vecteur motif obtenu à partir du vecteur de coefficients transformés ; et
- Calcul de la fonction de coût pour l'hypothèse courante à partir du vecteur de pixels obtenu.

L'unité de traitement μ2 coopère avec les différents modules fonctionnels décrits ci-dessus et la mémoire MEM2 afin de mettre en œuvre les étapes du procédé de décodage.

Le dispositif 200 comprend en outre une unité M₂ de stockage des scores prédéterminés ou probabilité de détection correcte mis en œuvre pour sélectionner les signes à prédire, des vecteurs de pixels correspondant aux 2M hypothèses de combinaisons de signes à prédire, leurs coûts associés ainsi que les vecteurs motifs à partir desquels on obtient les vecteurs de pixels. Ces unités sont pilotées par le processeur μ2 de l'unité de traitement μ2.

Les différents modules fonctionnels décrits ci-dessus peuvent être sous forme matérielle et/ou logicielle. Sous une forme logicielle, un tel module fonctionnel peut comprendre un processeur, une mémoire et des instructions de code de programme pour mettre en œuvre la fonction correspondante au module lorsque les instructions de code sont exécutées par un le processeur. Sous une forme matérielle, un tel module fonctionnel peut mis en œuvre par tout type de circuits d'encodage adaptés, tels que par exemple et de manière non limitative des microprocesseurs, des processeurs de traitement du signal (DSP pour Digital Signal Processor en anglais), des circuits intégrés spécifiques à des applications (ASICs pour Application Specific Integrated Circuit en anglais), des circuits FPGA pour Field Programmable Gâte Arrays en anglais, un câblage d'unités logiques.

De façon avantageuse, un tel dispositif 200 peut être intégré à un terminal d'utilisateur TU, par exemple un décodeur, un boitier de connexion TV (pour « Set-Top-Box », en anglais), un téléviseur numérique, un ordinateur, une tablette, un téléphone mobile intelligent, etc. Le dispositif 200 est alors agencé pour coopérer au moins avec le module suivant du terminal TU :

- un module E/R d'émission/réception de données, par l'intermédiaire duquel le train binaire TB ou le fichier compressé FC est reçu du réseau de télécommunications.

- un module DISP d'affichage des images numériques décodées.

L'invention qui vient d'être présentée peut trouver de nombreuses applications, en particulier dans le cadre d'une compression de signal vidéo, audio (paroles, son), d'images fixes, d'images acquises par un module d'imagerie médicale. Elle s'applique par exemple aussi bien aux contenus bidimensionnels (2D), tridimensionnels (3D) incluant une carte de profondeur, ou encore d'images multispectrales (dont les intensités de couleur sont différentes des trois bandes rouge vert bleu) ou enfin d'images intégrales.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de invention, qui est définie dans les revendications.

## Revendications

1. Procédé de codage d'une image numérique, ladite image étant divisée en une pluralité de blocs de pixels (C) traités dans un ordre défini, ledit procédé comprenant les étapes suivantes, mises en œuvre pour un bloc courant :

   - Traitement (E1) du bloc courant destiné à fournir un vecteur de coefficients transformés;
   - Sélection (E2) d'une séquence de M signes de coefficients à prédire dans le vecteur de coefficients, avec M entier supérieur ou égal à 2;
   - Prédiction (E5) de valeurs des signes de la séquence à partir d'une pluralité d'hypothèses de combinaisons de signes et d'une fonction de coût ;
   - Pour un signe de la séquence, codage (E6) d'un indicateur représentatif d'une différence entre sa valeur réelle et sa valeur prédite ;

   l'étape de prédiction comprenant les sous-étapes suivantes :
   pour au moins une deuxième hypothèse, dite hypothèse courante (Hi) :

   - Obtention (E512, E5'22) d'un vecteur de pixels associé à l'hypothèse courante ;
   - Calcul (E55, E5'5) de la fonction de coût pour l'hypothèse courante à partir du vecteur de pixels obtenu ;
   **caractérisé en ce que**, lors de l'étape d'obtention (E512, E5'22) d'un vecteur de pixels associé à l'hypothèse courante, le vecteur de pixels associé à l'hypothèse courante est obtenu par combinaison linéaire d'un vecteur de pixels (VPHO) associé à au moins une première hypothèse (H0) précédemment traitée et différente de l'hypothèse courante par la valeur d'au moins un signe (sj), avec j entier compris entre 0 et M, obtenu par transformation d'un vecteur de coefficients comprenant la combinaison de signes de la première hypothèse, et d'au moins un vecteur motif de pixels obtenu par transformation d'un vecteur de coefficients (VMj) associé audit au moins un signe (sj) de la séquence, de même dimension que le vecteur de coefficients transformés, et comprenant un coefficient d'amplitude égale à celle dudit vecteur à la position du coefficient correspondant au signe sj dans ledit vecteur, tous les autres coefficients étant mis à zéro.

2. Procédé de décodage d'une image numérique (Ik) à partir d'un train binaire (TB), ladite image étant divisée en une pluralité de blocs traités dans un ordre défini, le train binaire comprenant, pour un bloc (C'), des données codées représentatives d'un vecteur de coefficients transformés (VC), ledit procédé comprenant les étapes suivantes, mises en œuvre pour le bloc (C'), dit bloc courant :

   - Décodage (D1) des amplitudes des coefficients du vecteur de coefficients transformés, extraites du train binaire (TB);
   - Sélection (D2) d'une séquence de M signes de coefficients à prédire dans le vecteur de coefficients, avec M entier supérieur ou égal à 2;
   - Prédiction (D5) de valeurs des signes de la séquence à partir d'une pluralité d'hypothèses de combinaisons et d'une fonction de coût ;
   - Décodage (D6) de valeurs d'un indicateur de prédiction des signes sélectionnés à partir de données codées extraites du train binaire, l'indicateur de prédiction d'un signe étant représentatif d'une différence entre sa valeur réelle et sa valeur prédite ;
   - Calcul (D7) des valeurs décodées des signes sélectionnés à partir des valeurs d'indicateurs de prédiction décodées et des valeurs prédites;
   - Reconstruction (D8) des coefficients du bloc à partir des amplitudes décodées et des signes décodés;

   l'étape de prédiction (D5) comprenant les sous-étapes suivantes :
   pour au moins une deuxième hypothèse (Hi), dite hypothèse courante :

   - Obtention d'un vecteur de pixels associé à l'hypothèse courante;
   - Calcul de la fonction de coût pour l'hypothèse courante à partir du vecteur de pixels obtenu ;

   ledit procédé étant **caractérisé en ce que**, lors de l'étape d'obtention d'un vecteur de pixels associé à l'hypothèse courante, le vecteur de pixels associé à l'hypothèse courante est obtenu par combinaison linéaire d'un vecteur de pixels associé à une première hypothèse précédemment traitée et différente de l'hypothèse courante par la valeur d'au moins un signe (sj), avec j entier compris entre 0 et M, et obtenu par transformation d'un vecteur de coefficients comprenant les signes de la combinaison de la première hypothèse et d'au moins un vecteur motif de pixels obtenu par transformation d'un vecteur de coefficients (VMj) associé audit au moins un signe (sj) de la séquence, de même dimension que le vecteur de coefficients transformés, et comprenant un coefficient d'amplitude égale à celle dudit vecteur à la position du coefficient correspondant au signe sj dans ledit vecteur, tous les autres coefficients étant mis à zéro.

**3.** Procédé selon l'une des revendications **1** ou **2, caractérisé en ce que** l'étape d'obtention d'au moins un vecteur motif est mise en œuvre M fois et **en ce que** l'étape d'obtention d'un vecteur de pixels par transformation d'au moins un vecteur de coefficients est réalisée pour M+1 premières hypothèses.

**4.** Procédé selon l'une des revendications **1** à **3, caractérisé en ce que** le signe du coefficient non nul est choisi égal à +.

**5.** Procédé selon l'une des revendications **1** ou **4, caractérisé en ce que** le au moins un vecteur motif est calculé dans une étape préalable au traitement des hypothèses et stocké en mémoire et **en ce que** l'obtention du au moins un vecteur motif comprend la lecture de ladite mémoire.

**6.** Procédé selon la revendication **5, caractérisé en ce que** M vecteurs motifs sont calculés au préalable et **en ce que** l'étape d'obtention d'un vecteur de pixels est réalisée pour une seule première hypothèse.

**7.** Procédé selon l'une des revendications précédentes, **caractérisé en ce que** la fonction de coût est calculée à partir d'un sous-ensemble des pixels d'un vecteur de pixels, ledit sous-ensemble comprenant au moins les pixels localisés à une frontière du bloc courant avec un bloc voisin déjà traité et **en ce que** l'étape de transformation transforme le vecteur de coefficients en un sous-vecteur de pixels correspondant au sous-ensemble.

**8.** Dispositif (100) de codage d'une image numérique (Ik), ladite image étant divisée en une pluralité de blocs de pixels (C) traités dans un ordre défini, ledit dispositif étant configuré pour:

- Traiter un bloc courant destiné à fournir un vecteur de coefficients transformés;
- Sélection d'une séquence de N signes de coefficients à prédire dans le vecteur de coefficients, avec N entier supérieur ou égal à 2;
- Prédire des valeurs des signes de la séquence à partir d'une pluralité d'hypothèses de combinaisons et d'une fonction de coût ;
- Pour un signe de la séquence, coder un indicateur représentatif d'une différence entre sa valeur réelle et sa valeur prédite ;

la prédiction comprenant:

pour au moins une deuxième hypothèse (Hi), dite hypothèse courante :

- Obtention d'un vecteur de pixels associé à l'hypothèse courante ;
- Calcul de la fonction de coût pour l'hypothèse courante à partir du vecteur de pixels obtenu ;

ledit dispositif étant **caractérisé en ce que** le vecteur de pixels associé à l'hypothèse courante est obtenu par combinaison linéaire d'un vecteur de pixels associé à une première hypothèse précédemment traitée et différente de l'hypothèse courante par la valeur d'au moins un signe (sj), avec j entier compris entre 0 et M, et obtenu par transformation d'un vecteur de coefficients comprenant les signes de la combinaison de la première hypothèse et d'au moins un vecteur motif de pixels obtenu par transformation d'un vecteur de coefficients (VMj) associé audit au moins un signe (sj) de la séquence, de même dimension que le vecteur de coefficients transformés, et comprenant un coefficient d'amplitude égale à celle dudit vecteur à la position du coefficient correspondant au signe sj dans ledit vecteur, tous les autres coefficients étant mis à zéro.

**9.** Dispositif (200) de décodage d'une image numérique (Ik) à partir d'un train binaire (TB), ladite image étant divisée en une pluralité de blocs traités dans un ordre défini, le train binaire comprenant, pour un bloc (C), des données codées représentatives d'un vecteur de coefficients transformés (VC), ledit dispositif étant configuré pour :

- Décoder (DEC) des amplitudes des coefficients du vecteur de coefficients transformés d'un bloc courant, extraites du train binaire (TB);
- Sélectionner (SEL) une séquence de N signes de coefficients à prédire dans le vecteur de coefficients, avec N entier supérieur ou égal à 2;
- Prédire (PRED) des valeurs des signes de la séquence à partir d'une pluralité d'hypothèses de combinaisons et d'une fonction de coût ;
- Décoder (DEC IP) des valeurs d'un indicateur de prédiction des signes sélectionnés à partir de données codées extraites du train binaire, l'indicateur de prédiction d'un signe étant représentatif d'une différence entre sa valeur réelle et sa valeur prédite ;
- Calculer (CALC) des valeurs décodées des signes sélectionnés à partir des valeurs d'indicateurs de prédiction décodées et des valeurs prédites;

la prédiction comprenant en outre :
pour au moins une deuxième hypothèse (Hi), dite hypothèse courante :

- Obtention d'un vecteur de pixels associé à l'hypothèse courante ; et
- Calcul de la fonction de coût pour l'hypothèse courante à partir du vecteur de pixels obtenu ;

ledit dispositif étant **caractérisé en ce que** le vecteur de pixels associé à l'hypothèse courante est obtenu par combinaison linéaire d'un vecteur de pixels associé à une première hypothèse précédemment traitée et différente de l'hypothèse courante par la valeur d'au moins un signe (sj), avec j entier compris entre 0 et M, et obtenu par transformation d'un vecteur de coefficients comprenant les signes de la combinaison de la première hypothèse et d'au moins un vecteur motif de pixels obtenu par transformation d'un vecteur de coefficients (VMj) associé audit au moins un signe (sj) de la séquence de même dimension que le vecteur de coefficients transformés, et comprenant un coefficient d'amplitude égale à celle dudit vecteur à la position du coefficient correspondant au signe sj dans ledit vecteur, tous les autres coefficients étant mis à zéro.

10. Equipement terminal comprenant un dispositif (100) de codage d'une image selon la revendication **8** et un dispositif (200) de décodage selon la revendication **9**.

11. Programme d'ordinateur comprenant des instructions qui, lorsque le programme est exécuté par un ordinateur, conduisent celui-ci à mettre en œuvre le procédé de codage selon l'une quelconque des revendications 1 et 3 à 7.

12. Programme d'ordinateur comprenant des instructions qui, lorsque le programme est exécuté par un ordinateur, conduisent celui-ci à mettre en œuvre le procédé de décodage selon l'une quelconque des revendications 2 à 7.

**Patentansprüche**

1. Verfahren zum Codieren eines digitalen Bildes, wobei das Bild in eine Vielzahl von Pixelblöcken (C) unterteilt ist, die in einer festgelegten Reihenfolge verarbeitet werden, wobei das Verfahren die folgenden Schritte umfasst, die für einen laufenden Block durchgeführt werden:

   - Verarbeiten (E1) des laufenden Blocks, der zur Bereitstellung eines Vektors transformierter Koeffizienten bestimmt ist;
   - Auswählen (E2) einer Sequenz von M vorherzusagenden Koeffizientenvorzeichen im Koeffizientenvektor mit M als Ganzzahl größer oder gleich 2;
   - Vorhersagen (E5) von Werten der Vorzeichen der Sequenz auf der Basis einer Vielzahl von Hypothesen von Vorzeichenkombinationen und einer Kostenfunktion;
   - für ein Vorzeichen der Sequenz, Codieren (E6) eines Indikators, der für eine Differenz zwischen seinem tatsächlichen Wert und seinem vorhergesagten Wert repräsentativ ist;

wobei der Schritt des Vorhersagens die folgenden Unterschritte umfasst:
für mindestens eine zweite Hypothese, bezeichnet als laufende Hypothese (Hi):

   - Erhalten (E512, E5'22) eines Pixelvektors, der der laufenden Hypothese zugeordnet ist;
   - Berechnen (E55, E5'5) der Kostenfunktion für die laufende Hypothese auf der Basis des erhaltenen Pixelvektors;

**dadurch gekennzeichnet, dass** beim Schritt des Erhaltens (E512, E5'22) eines Pixelvektors, der der laufenden Hypothese zugeordnet ist, der der laufenden Hypothese zugeordnete Pixelvektor durch lineare Kombination eines Pixelvektors (VPHO) erhalten wird, der mindestens einer ersten Hypothese (H0) zugeordnet ist, die zuvor verarbeitet wurde und sich von der laufenden Hypothese durch den Wert von mindestens einem Vorzeichen (sj) unterscheidet, mit j als Ganzzahl zwischen 0 und M, erhalten durch Transformation eines Koeffizientenvektors, umfassend die Vorzeichenkombination der ersten Hypothese, und mindestens eines Pixelmotivvektors, erhalten durch Transformation eines Koeffizientenvektors (VMj), der dem mindestens einen Vorzeichen (sj) der Sequenz zugeordnet ist, mit derselben Dimension wie der Vektor transformierter Koeffizienten, und umfassend einen Koeffizienten einer Amplitude, die gleich der des Vektors an der Position des Koeffizienten entsprechend dem Vorzeichen sj in dem Vektor ist, wobei alle anderen Koeffizienten auf null gesetzt sind.

2. Verfahren zum Decodieren eines digitalen Bildes (Ik) auf der Basis eines Bitstroms (TB), wobei das Bild in eine Vielzahl von Blöcken unterteilt ist, die in einer festgelegten Reihenfolge verarbeitet werden, wobei der Bitstrom für einen Block (C') codierte Daten umfasst, die für einen Vektor transformierter Koeffizienten (VC) repräsentativ sind, wobei das Verfahren die folgenden Schritte umfasst, die für den Block (C'), bezeichnet als laufender Block, durchgeführt werden:

   - Decodieren (D1) der Amplituden der Koeffizienten des Vektors transformierter Koeffizienten, die aus dem Bitstrom (TB) extrahiert wurden;
   - Auswählen (E2) einer Sequenz von M vorherzusagenden Koeffizientenvorzeichen im Koeffizientenvektor mit M als Ganzzahl größer oder gleich 2;

- Vorhersagen (E5) von Werten der Vorzeichen der Sequenz auf der Basis einer Vielzahl von Hypothesen von Kombinationen und einer Kostenfunktion;

- Decodieren (D6) von Werten eines Indikators zur Vorhersage der Vorzeichen, die auf der Basis codierter, aus dem Bitstrom extrahierter Daten ausgewählt wurden, wobei der Indikator zur Vorhersage eines Vorzeichens für eine Differenz zwischen dessen tatsächlichem Wert und dessen vorhergesagtem Wert repräsentativ ist;

- Berechnen (D7) der decodierten Werte der Vorzeichen, die auf der Basis der decodierten Vorhersageindikatorwerte und der vorhergesagten Werte ausgewählt wurden;

- Rekonstruieren (D8) der Koeffizienten des Blocks auf der Basis der decodierten Amplituden und der decodierten Vorzeichen;

wobei der Schritt des Vorhersagens (D5) die folgenden Unterschritte umfasst:
für mindestens eine zweite Hypothese (Hi), bezeichnet als laufende Hypothese:

- Erhalten eines Pixelvektors, der der laufenden Hypothese zugeordnet ist;
- Berechnen der Kostenfunktion für die laufende Hypothese auf der Basis des erhaltenen Pixelvektors;

wobei das Verfahren **dadurch gekennzeichnet ist, dass** beim Schritt des Erhaltens eines Pixelvektors, der der laufenden Hypothese zugeordnet ist, der der laufenden Hypothese zugeordnete Pixelvektor durch lineare Kombination eines Pixelvektors erhalten wird, der einer ersten Hypothese zugeordnet ist, die zuvor verarbeitet wurde und sich von der laufenden Hypothese durch den Wert von mindestens einem Vorzeichen (sj) unterscheidet, mit j als Ganzzahl zwischen 0 und M, und erhalten durch Transformation eines Koeffizientenvektors, umfassend die Vorzeichen der Kombination der ersten Hypothese, und mindestens eines Pixelmotivvektors, erhalten durch Transformation eines Koeffizientenvektors (VMj), der dem mindestens einen Vorzeichen (sj) der Sequenz zugeordnet ist, mit derselben Dimension wie der Vektor transformierter Koeffizienten, und umfassend einen Koeffizienten einer Amplitude, die gleich der des Vektors an der Position des Koeffizienten entsprechend dem Vorzeichen sj in dem Vektor ist, wobei alle anderen Koeffizienten auf null gesetzt sind.

3.  Verfahren nach einem der Ansprüche **1** oder **2**, **dadurch gekennzeichnet, dass** der Schritt des Erhaltens mindestens eines Motivvektors M Mal durchgeführt wird und dass der Schritt des Erhaltens eines Pixelvektors durch Transformation mindestens eines Koeffizientenvektors für M+1 erste Hypothesen durchgeführt wird.

4.  Verfahren nach einem der Ansprüche **1** bis **3**, **dadurch gekennzeichnet, dass** das Vorzeichen des Koeffizienten ungleich null gleich + ausgewählt ist.

5.  Verfahren nach einem der Ansprüche **1** oder **4**, **dadurch gekennzeichnet, dass** der mindestens eine Motivvektor in einem Schritt vor dem Verarbeiten der Hypothesen berechnet und im Speicher gespeichert wird und dass das Erhalten des mindestens einen Motivvektors das Lesen des Speichers umfasst.

6.  Verfahren nach Anspruch **5**, **dadurch gekennzeichnet, dass** zuvor M Motivvektoren berechnet werden und dass der Schritt des Erhaltens eines Pixelvektors für eine einzige erste Hypothese durchgeführt wird.

7.  Verfahren nach einem der vorangehenden Ansprüche, **dadurch gekennzeichnet, dass** die Kostenfunktion auf der Basis einer Untereinheit der Pixel eines Pixelvektors berechnet wird, wobei die Untereinheit mindestens die Pixel umfasst, die an einer Grenze des laufenden Blocks mit einem bereits verarbeiteten benachbarten Block lokalisiert sind und dass der Schritt des Transformierens den Koeffizientenvektor in einen Untervektor von Pixeln entsprechend der Untereinheit transformiert.

8.  Vorrichtung (100) zum Codieren eines digitalen Bildes (Ik), wobei das Bild in eine Vielzahl von Pixelblöcken (C) unterteilt ist, die in einer festgelegten Reihenfolge verarbeitet werden, wobei die Vorrichtung ausgelegt ist, um:

- einen laufenden Block zu verarbeiten, der zur Bereitstellung eines Vektors transformierter Koeffizienten bestimmt ist;
- eine Sequenz von M Sequenz vorherzusagenden Koeffizientenvorzeichen im Koeffizientenvektor mit M als Ganzzahl größer oder gleich 2 auszuwählen;
- Werte der Vorzeichen der Sequenz auf der Basis einer Vielzahl von Hypothesen von Kombinationen und einer Kostenfunktion vorherzusagen;
- für ein Vorzeichen der Sequenz, einen Indikator zu codieren, der für eine Differenz zwischen seinem tatsächlichen Wert und seinem vorhergesagten Wert repräsentativ ist;

wobei das Vorhersagen umfasst:
für mindestens eine zweite Hypothese (Hi), bezeichnet als laufende Hypothese:

- Erhalten eines Pixelvektors, der der laufenden Hypothese zugeordnet ist;
- Berechnen der Kostenfunktion für die laufende Hypothese auf der Basis des erhaltenen Pixelvektors;

wobei die Vorrichtung **dadurch gekennzeichnet ist, dass** der Pixelvektor, der der laufenden Hypothese zugeordnet ist, durch lineare Kombination eines Pixelvektors erhalten wird, der einer ersten Hypothese zugeordnet ist, die zuvor verarbeitet wurde und sich von der laufenden Hypothese durch den Wert von mindestens einem Vorzeichen (sj) unterscheidet, mit j als Ganzzahl zwischen 0 und M, und erhalten durch Transformation eines Koeffizientenvektors, umfassend die Vorzeichen der Kombination der ersten Hypothese, und mindestens eines Pixelmotivvektors, erhalten durch Transformation eines Koeffizientenvektors (VMj), der dem mindestens einen Vorzeichen (sj) der Sequenz zugeordnet ist, mit derselben Dimension wie der Vektor transformierter Koeffizienten, und umfassend einen Koeffizienten einer Amplitude, die gleich der des Vektors an der Position des Koeffizienten entsprechend dem Vorzeichen sj in dem Vektor ist, wobei alle anderen Koeffizienten auf null gesetzt sind.

9. Vorrichtung (200) zum Decodieren eines digitalen Bildes (Ik) auf der Basis eines Bitstroms (TB), wobei das Bild in eine Vielzahl von Blöcken unterteilt ist, die in einer festgelegten Reihenfolge verarbeitet werden, wobei der Bitstrom für einen Block (C) codierte Daten umfasst, die für einen Vektor transformierter Koeffizienten (VC) repräsentativ sind, wobei die Vorrichtung ausgelegt ist, um:

- Amplituden der Koeffizienten des Vektors transformierter Koeffizienten eines laufenden Blicks zu decodieren (DEC), die aus dem Bitstrom (TB) extrahiert wurden;
- eine Sequenz von M vorherzusagenden Koeffizientenvorzeichen im Koeffizientenvektor auszuwählen (SEL), mit M als Ganzzahl größer oder gleich 2;
- Werte der Vorzeichen der Sequenz auf der Basis einer Vielzahl von Hypothesen von Kombinationen und einer Kostenfunktion vorherzusagen (PRED);
- Werte eines Indikators zur Vorhersage der Vorzeichen, die auf der Basis codierter, aus dem Bitstrom extrahierter Daten ausgewählt wurden, zu decodieren (DEC IP), wobei der Indikator zur Vorhersage eines Vorzeichens für eine Differenz zwischen dessen tatsächlichem Wert und dessen vorhergesagtem Wert repräsentativ ist;
- decodierte Werte der Vorzeichen, die auf der Basis der decodierten Vorhersageindikatorwerte und der vorhergesagten Werte ausgewählt wurden, zu berechnen (CALC);

wobei die Vorhersage ferner umfasst:
für mindestens eine zweite Hypothese (Hi), bezeichnet als laufende Hypothese:

- Erhalten eines Pixelvektors, der der laufenden Hypothese zugeordnet ist; und
- Berechnen der Kostenfunktion für die laufende Hypothese auf der Basis des erhaltenen Pixelvektors;

wobei die Vorrichtung **dadurch gekennzeichnet ist, dass** der Pixelvektor, der der laufenden Hypothese zugeordnet ist, durch lineare Kombination eines Pixelvektors erhalten wird, der einer ersten Hypothese zugeordnet ist, die zuvor verarbeitet wurde und sich von der laufenden Hypothese durch den Wert von mindestens einem Vorzeichen (sj) unterscheidet, mit j als Ganzzahl zwischen 0 und M, und erhalten durch Transformation eines Koeffizientenvektors, umfassend die Vorzeichen der Kombination der ersten Hypothese, und mindestens eines Pixelmotivvektors, erhalten durch Transformation eines Koeffizientenvektors (VMj), der dem mindestens einen Vorzeichen (sj) der Sequenz zugeordnet ist, mit derselben Dimension wie der Vektor transformierter Koeffizienten, und umfassend einen Koeffizienten einer Amplitude, die gleich der des Vektors an der Position des Koeffizienten entsprechend dem Vorzeichen sj in dem Vektor ist, wobei alle anderen Koeffizienten auf null gesetzt sind.

10. Endgerätausrüstung, umfassend eine Vorrichtung (100) zum Codieren eines Bildes nach Anspruch **8** und eine Vorrichtung (200) zum Decodieren nach Anspruch **9**.

11. Rechnerprogramm, aufweisend Befehle, die, wenn das Programm von einem Rechner ausgeführt wird, diesen dazu veranlassen, das Codierverfahren nach einem der Ansprüche **1, 3** bis **7** durchzuführen.

12. Rechnerprogramm, aufweisend Befehle, die, wenn das Programm von einem Rechner ausgeführt wird, diesen dazu veranlassen, das Decodierverfahren nach einem der Ansprüche **2** bis **7** durchzuführen.

**Claims**

1. A method for encoding a digital image, said image being divided into a plurality of pixel blocks (C) processed in a defined order, said method comprising the following steps, implemented for a current block:

- Processing (E1) the current block to provide a vector of transformed coefficients;

- Selecting (E2) a sequence of M signs of coefficients to be predicted in the coefficient vector, with M being an integer greater than or equal to 2;
- Predicting (E5) the values of the signs of the sequence from a plurality of assumptions of combinations of signs and a cost function;
- For a sign of the sequence, coding (E6) of an indicator representing a difference between its actual value and its predicted value;

the prediction step comprising the following substeps:

for at least one second hypothesis, called the current hypothesis (Hi):

- Obtaining (E512, E5'22) a vector of pixels associated with the current hypothesis;
- Calculating (E55, E5'5) the cost function for the current assumption from the pixel vector obtained;

**characterised in that**, during the step of obtaining (E512, E5'22) a vector of pixels associated with the current hypothesis, the vector of pixels associated with the current hypothesis is obtained by linear combination of a vector of pixels (VPHO) associated with at least one first hypothesis (H0) previously processed and different from the current hypothesis by the value of at least one sign (sj), with j being an integer between 0 and M, obtained by transforming a vector of coefficients comprising the combination of the signs of the first hypothesis, and at least one pixel pattern vector obtained by transforming a vector of coefficients (VMj) associated with said at least one sign (sj) of the sequence, of the same dimension as the vector of transformed coefficients, and comprising a coefficient of amplitude equal to that of said vector at the position of the coefficient corresponding to the sign sj in said vector, all the other coefficients being set to zero.

2. A method for decoding a digital image (Ik) from a bit stream (TB), said image being divided into a plurality of blocks processed in a defined order, the bit stream comprising, for a block (C'), coded data representative of a vector of transformed coefficients (VC), said method comprising the following steps, implemented for the block (C'), referred to as the current block:

- Decoding (D1) the coefficient amplitudes of the vector of transformed coefficients extracted from the bitstream (TB);
- Selecting (D2) a sequence of M signs of coefficients to be predicted in the coefficient vector, with M being an integer greater than or equal to 2;
- Predicting (D5) the values of the signs of the sequence from a plurality of combination assumptions and a cost function;
- Decoding (D6) the values of a sign prediction indicator selected from coded data extracted from the bit stream, the sign prediction indicator being representative of a difference between its actual value and its predicted value;
- Calculating (D7) the decoded values of the selected signs from the decoded prediction indicator values and the predicted values;
- Reconstructing (D8) the block coefficients from the decoded amplitudes and decoded signs;

the prediction step (D5) comprising the following sub-steps:
for at least a second hypothesis (Hi), called the current hypothesis:

- Obtaining a vector of pixels associated with the current hypothesis;
- Calculating the cost function for the current assumption from the obtained pixel vector;

said method being **characterised in that**, during the step of obtaining a vector of pixels associated with the current hypothesis, the vector of pixels associated with the current hypothesis is obtained by linear combination of a vector of pixels associated with a first hypothesis previously processed and different from the current hypothesis by the value of at least one sign (sj), with j being an integer between 0 and M, and obtained by transforming a vector of coefficients comprising the signs of the combination of the first hypothesis and of at least one pixel pattern vector obtained by transforming a vector of coefficients (VMj) associated with said at least one sign (sj) of the sequence, of the same dimension as the vector of transformed coefficients, and comprising a coefficient of amplitude equal to that of said vector at the position of the coefficient corresponding to the sign sj in said vector, all the other coefficients being set to zero.

3. A method according to one of claims **1** or **2**, **characterised in that** the step of obtaining at least one pattern vector is implemented M times and **in that** the step of obtaining a vector of pixels by transforming at least one vector of coefficients is implemented for M+1 first hypotheses.

4. A method according to one of claims **1** to **3**, **characterised in that** the sign of the non-zero coefficient is chosen to be equal to +.

5. A method according to one of claims **1** or **4**, **characterised in that** the at least one pattern vector is calculated in a step prior to hypothesis processing and stored in memory and **in that** obtaining the at least one pattern vector comprises reading said memory.

6. A method according to claim **5**, **characterised in that** M pattern vectors are calculated beforehand and **in that** the step of obtaining a vector of pixels is performed for a single first hypothesis.

7. A method according to one of the preceding claims, **characterised in that** the cost function is calculated from a subset of the pixels of a vector of pixels, said subset comprising at least the pixels located at a boundary of the current block with an already processed neighbouring block, and **in that** the transformation step transforms the vector of coefficients into a sub-vector of pixels corresponding to the subset.

8. A device (100) for encoding a digital image (Ik), said image being divided into a plurality of pixel blocks (C) processed in a defined order, said device being configured to:

   - Processing a current block to provide a vector of transformed coefficients;
   - Selecting a sequence of N signs of coefficients to be predicted in the coefficient vector, where N is an integer greater than or equal to 2;
   - Predicting values of the signs of the sequence from a plurality of combination assumptions and a cost function;
   - For a sign of the sequence, encoding an indicator representing a difference between its actual value and its predicted value;

   the prediction comprising :
   for at least a second hypothesis (Hi), called the current hypothesis:

   - Obtaining a vector of pixels associated with the current hypothesis;
   - Calculating the cost function for the current assumption from the obtained pixel vector;

   said device being **characterised in that** the vector of pixels associated with the current hypothesis is obtained by linear combination of a vector of pixels associated with a first hypothesis previously processed and different from the current hypothesis by the value of at least one sign (sj), with j being an integer between 0 and M, and obtained by transforming a vector of coefficients comprising the signs of the combination of the first hypothesis and of at least one pixel pattern vector obtained by transforming a vector of coefficients (VMj) associated with said at least one sign (sj) of the sequence, of the same dimension as the vector of transformed coefficients, and comprising a coefficient of amplitude equal to that of said vector at the position of the coefficient corresponding to the sign sj in said vector, all the other coefficients being set to zero.

9. A device (200) for decoding a digital image (Ik) from a bitstream (TB), said image being divided into a plurality of blocks processed in a defined order, the bitstream comprising, for a block (C), coded data representative of a vector of transformed coefficients (VC), said device being configured for:

   - Decoding (DEC) the amplitudes of the vector of transformed coefficients of a current block, extracted from the bitstream (TB);
   - Selecting (SEL) a sequence of N signs of coefficients to be predicted in the coefficient vector, with N being an integer greater than or equal to 2;
   - Predicting (PRED) the values of the signs of the sequence from a plurality of combination assumptions and a cost function;
   - Decoding (IP DEC) the values of a sign prediction indicator selected from coded data extracted from the bit stream, the sign prediction indicator of a sign being representative of a difference between its actual value and its predicted value;
   - Calculating (CALC) the decoded values of selected signs from decoded prediction flag values and predicted values;

   the prediction further comprising:
   for at least a second hypothesis (Hi), called the current hypothesis :

   - Obtaining a vector of pixels associated with the current hypothesis; and
   - Calculating the cost function for the current assumption from the obtained pixel vector;

   said device being **characterised in that** the vector of pixels associated with the current hypothesis is obtained by linear combination of a vector of pixels associated with a first hypothesis previously processed and different from the current hypothesis by the value of at least one sign (sj), with j being an integer between 0 and M, and obtained by transforming a vector of coefficients comprising the signs of the combination of the first hypothesis and of at least one pixel pattern vector obtained by transforming a vector of coefficients (VMj) associated with said at least one sign (sj) of the sequence of the same dimension as the vector of transformed coefficients, and comprising a coefficient of amplitude equal to that of said vector at the position of the coefficient corresponding to the sign sj in said vector, all the other coefficients being set to zero.

10. A terminal equipment comprising a device (100) for encoding an image according to claim **8** and a device (200) for decoding according to claim **9**.

11. A computer program having instructions which, when the program is executed by a computer, cause the computer to implement the coding method according to any of claims **1, 3** to **7**.

12. A computer program having instructions which, when the program is executed by a computer, cause the computer to implement the decoding method according to any of claims 2 to **7**.

FIG. 1

FIG. 3

FIG. 2

FIG. 4A

FIG. 4B

FIG. 4C

VC          SSP

SELECT H0, H1, H2 — E511

CALC VPH0, VPH1, VPH2 — E512

VM1, VM2

CALC VM1, VM2 — E52

E53
SELECT Hi, i>2

VPH0, VMj

CALC VPHi — E54

VPHi

CALC Ci — E55

E56
i=i+1?          y

n

DECIDE — E57

FIG. 5

FIG. 6

FIG. 7

FIG. 8

FIG. 9

FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3023112

**Littérature non-brevet citée dans la description**

- **KOYAMA J. et al.** Coefficient sign bit compression in video coding » et publié dans les proceedings de la conférence. *IEEE Picture Coding Symposium,* 07 Mai 2012, 385-388
- **SOLE et al.** Transform Coefficient Coding in HEVC. *IEEE TRANSACTIONS ON CIRCUITS AND SYSTEMS FOR VIDEO TECHNOLOGY,* Décembre 2012, vol. 22 (12
- **SOLE J. et al.** Transform Coefficient Coding in HEVC. *IEEE Transactions on Circuits and Systems for Video Technology,* Décembre 2012, vol. 23 (12
- **PONOMARENKO et al.** Prédiction of signs of DCT coefficients in block-based lossy image compression. *Image Processing: Algorithms and Systems, Proceedings of the SPIE,* Février 2007, vol. 6497